# EUROPÄISCHE PATENTSCHRIFT

(11) **EP 3 957 432 B1**
(45) Veröffentlichungstag und Bekanntmachung des Hinweises auf die Patenterteilung: **31.07.2024**
(21) Anmeldenummer: 21178527.4
(22) Anmeldetag: 09.06.2021
(51) Int. Cl.: B23Q 1/00, B23Q 17/00

(54) **SPANNFUTTER**
COLLET CHUCK
MANDRIN

(30) Priorität: 21.08.2020 CH 10432020
(43) Veröffentlichungstag der Anmeldung: 23.02.2022
(73) Patentinhaber: Erowa AG, 5734 Reinach (CH)
(72) Erfinder: Hediger, Hans, 5734 Reinach (CH)
(74) Vertreter: Puschmann Borchert Kaiser Klettner Patentanwälte Partnerschaft mbB

(56) Entgegenhaltungen:
- EP-A1- 1 344 599
- EP-A2- 1 175 959

## Beschreibung

Die vorliegende Erfindung bezieht sich auf ein Spannfutter, auf eine Spanneinrichtung, auf eine Spannfutteranordnung sowie auf ein Verfahren.

Spannfutter der hier zur Rede stehenden Art dienen dem positionsdefinierten Festspannen von Paletten bzw. Werkstückträgern. Neben Einfach-Spannfuttern zum Festspannen von mit einem Spannzapfen versehenen Paletten bzw. Werkstückträgern sind auch Mehrfach-Spannfutter bekannt, welche zumindest zwei Spannfutter zum Festspannen von mit einer korrespondierenden Anzahl von Spannzapfen versehenen Paletten aufweisen. Solche Mehrfach-Spannfutter werden nachfolgend insbesondere auch Spanneinrichtung genannt, wobei deren Spannfutter auf einem Spannuntersatz angeordnet sind. Unter dem Begriff Spannfutteranordnung wird jeweils ein Einfach- oder Mehrfach-Spannfutter inkl. dessen Peripherie wie beispielsweise Anschluss- oder Druckleitungen, Sensoren, Druckregler, Drossel etc. verstanden.

Das Spannfutter bzw. der jeweilige Spannuntersatz wird üblicherweise fest auf dem Maschinentisch einer Bearbeitungsmaschine montiert, während die Palette wiederholbar genau an dem Spannfutter bzw. der Spanneinrichtung festspannbar ist. Das jeweilige Spannfutter ist mit einer Aufnahmeöffnung und einer Spannvorrichtung zum Festspannen des Spannzapfens in der Aufnahmeöffnung versehen. Die Palette trägt zumeist ein zu bearbeitendes Werkstück oder Werkzeug.

Wenn derartige Spannfutter bzw. Spannuntersätze bei halb- oder vollautomatisch ablaufenden Arbeitsprozessen zum Einsatz kommen, wird die Palette dem Spannfutter bzw. der Spanneinrichtung üblicherweise mittels eines Handlingroboters zugeführt und auch wieder daraus entnommen. Dabei ist es wichtig, dass die Palette sicher festgespannt und gehalten wird. Ist die Palette beispielsweise nicht korrekt am Spannfutter bzw. der Spanneinrichtung fixiert, so besteht die Gefahr, dass sich diese bei der mechanischen Bearbeitung des daran festgespannten Werkstücks, beispielsweise während eines Fräsvorgangs, löst, was zu erheblichen Folgeschäden führen und Personen gefährden kann.

Die EP 1 344 599 A1 offenbart eine Spanneinrichtung mit einem Spannfutter und einem daran festspannbaren Spannzapfen. Zur Aufnahme des Spannzapfens ist das Spannfutter mit einer zentralen Öffnung versehen. Das Spannfutter weist zudem mehrere Öffnungen zum Ausblasen von Luft auf. Einige dieser Ausblasöffnungen sind in einem konischen Einführabschnitt der zentralen Öffnung angeordnet und können mittels des Spannzapfens bzw. dessen Zentrierflächenabschnitten verschlossen werden. Die Ausblasöffnungen dienen ausschliesslich der Reinigung der genannten Zentrierflächenabschnitte.

Aus der EP 2 052 808 A1 ist eine Spanneinrichtung mit einem Spannfutter zum lösbaren Fixieren eines Werkstückträgers bekannt. Das Spannfutter ist mit einem Verriegelungsmechanismus versehen, der mehrere Spannelemente umfasst, welche in der Verriegelungsstellung an einem mit dem Werkstückträger verbundenen Spannzapfen angreifen. Jedes Spannelement ist mit einer Durchgangsbohrung versehen, welche bei korrekter Verriegelung des jeweiligen Spannelements einseitig verschlossen ist. Zusätzlich oder alternativ ist jedem Spannelement ein mit einer Durchgangsbohrung versehenes Betätigungselement zugeordnet, dessen Durchgangsbohrung bei korrekter Verriegelung und/oder Entriegelung des zugehörigen Spannelements einseitig verschlossen ist. Die Durchgangsbohrungen der Spannelemente bzw. der Betätigungselemente sind über eine gemeinsame Verbindungsleitung mit einer pneumatischen Quelle verbunden. In der Verbindungsleitung ist zumindest ein Sensor zum Erfassen der Luftströmung vorgesehen. Mittels des Sensors kann erkannt werden, ob die Spannelemente korrekt entriegelt bzw. verriegelt wurden. Der Sensor ist mit einer elektronischen Steuer- und Auswertevorrichtung verbunden.

Aus der EP 2 177 309 A1 ist ein Schnellspannzylinder zum Einspannen eines Einzugsnippels bekannt. Der Schnellspannzylinder soll eine Kontrolle der Funktion des Einzugsnippels beim Einspannen bieten. Der Schnellspannzylinder umfasst ein Gehäuse mit einer zentralen Ausnehmung zur Aufnahme des an einer Palette angeordneten Einzugsnippels. Im Gehäuse ist ein Verriegelungsmechanismus mit einem druckmittelbetätigten Kolben und mehreren Verriegelungskörpern angeordnet. Der Kolben wird mittels eines Federpakets in die Verriegelungsstellung bewegt und druckmittelbetätigt entriegelt. Im Verschiebungsweg des Federpakets ist ein erstes Betätigungselement angeordnet, dessen Betätigungssignal überwacht wird. Im Kontrollfluss des ersten Betätigungselements ist ein zweites Betätigungselement vorgeschaltet, welches den Verschiebungszustand des Einzugsnippels erfasst. Beide Betätigungselemente sind als wegeabhängig betätigbare Schalter in Form von fluidischen Kontrollventilen ausgebildet, die in einer Kontrollleitung angeordnet sind und diese zustandsabhängig öffnen bzw. schliessen.

Aus der EP 2 218 541 A1 ist ein weiterer Schnellspannzylinder zum Einspannen eines Einzugsnippels bekannt. Dieser Schnellspannzylinder soll eine Kontrollmöglichkeit über die richtige Verrastung des Einzugsnippels im Gehäuse des Schnellspannzylinders gewährleisten. Dazu ist im Gehäuse des Schnellspannzylinders ein federbelastetes Betätigungselement angeordnet, das vom Einzugsnippel entgegen der Federkraft betätigbar ist und dessen Verschiebungsweg den Durchlass für ein Kontrollmedium steuert.

Schliesslich geht aus der US 4,504,824 A ein Werkzeug-Erfassungs-System für eine Bearbeitungsmaschine -Fräsmaschine- hervor. Die Bearbeitungsmaschine ist mit einem stationären Teil versehen, innerhalb dessen in üblicher Weise eine Spindel drehbar gelagert ist. Die Werkzeugaufnahme ist mit einer konischen Aussparung zur Aufnahme des konischen Schafts eines Bearbeitungswerkzeugs versehen. Der stationäre Teil ist mit einer die Spindel umgebenden Ringkammer versehen, von welcher radiale Bohrungen durch die Spindel hindurch zu der konischen Aussparung führen. Die Ringkammer ist über eine Leitung mit einer Druckquelle verbunden, wobei in der Leitung ein Druckregler angeordnet ist. Zudem ist die Leitung mit einem Druckschalter verbunden. Sobald ein Bearbeitungswerkzeug in der Aufnahme aufgenommen und festgespannt ist, werden die radialen Bohrungen von dem konischen Schaft des Bearbeitungswerkzeugs verschlossen, was mittels des Druckschalters überwacht werden kann.

Aufgabe der Erfindung ist es, ein gemäss dem Oberbegriff des Anspruchs 1 ausgebildetes Spannfutter zum Festspannen von mit einem Spannzapfen versehenen Paletten derart weiterzubilden, dass die Anwesenheit der Palette im Spannfutter überwacht werden kann.

Die Lösung der Aufgabe ist durch die Merkmale des Anspruchs 1 definiert. Gemäss der Erfindung ist das Spannfutter mit einer von einem Einlass zu einem Auslass führenden, pneumatisch beaufschlagbaren Überwachungsleitung versehen, wobei die Aufnahmeöffnung einen konischen Einführbereich aufweist, in den zumindest eine mit der Überwachungsleitung verbundene Kontrollbohrung mündet, welche mittels des Spannzapfens verschliessbar ist.

Indem das Spannfutter mit einer von einem Einlass zu einem Auslass führenden, pneumatisch beaufschlagbaren Überwachungsleitung versehen ist und die Aufnahmeöffnung einen konischen Einführbereich aufweist, in den zumindest eine mit der Überwachungsleitung verbundene Kontrollbohrung mündet, welche mittels des Spannzapfens verschliessbar ist, wird die grundsätzliche Möglichkeit geschaffen, die Anwesenheit eines Spannzapfens in der Aufnahmeöffnung festzustellen. Ein besonderer Vorzug dieser Ausbildung liegt darin, dass das Spannfutter mit vergleichsweise geringem Aufwand in die üblicherweise bereits vorhandene Infrastruktur/Peripherie einer Bearbeitungsmaschine eingebunden werden kann. Da solche Bearbeitungsmaschinen in der Regel zumindest eine pneumatische Druckleitung zum Öffnen und/oder Schliessen des Spannfutters aufweisen, kann die Druckluft auch dazu genutzt werden, um die Überwachungsleitung damit zu beaufschlagen und zu gegebenem Zeitpunkt den Druck darin zu messen. Sofern kein Spannzapfen in der Aufnahmeöffnung des Spannfutters aufgenommen ist, entweicht der Druck über die Kontrollbohrung(en), was mittels eines mit der Überwachungsleitung verbundenen Drucksensors gemessen und mit einer Auswerteelektronik erfasst und ausgewertet werden kann. Da zumeist auch bereits eine Auswerteelektronik vorhanden ist, braucht es neben zumindest einem Drucksensor lediglich eine softwaremässige Anpassung der Auswerteelektronik.

Bevorzugte Ausführungsformen und Weiterbildungen des Spannfutters sind in den abhängigen Ansprüchen 2 bis 8 umschrieben.

So ist bei einer bevorzugten Weiterbildung vorgesehen, dass die Spannvorrichtung des Spannfutters einen zwischen einer Ausgangsstellung und einer Verriegelungsstellung verschiebbaren Betätigungskolben zum Betätigen von Spannorganen aufweist, und das Spannfutter eine zwischen dem Einlass und dem Auslass der Überwachungsleitung angeordnete Ventilvorrichtung aufweist, mittels welcher der Durchfluss eines Fluids durch die Überwachungsleitung abhängig von der Stellung des Betätigungskolbens veränderbar ist. Mittels einer solchen Ventilvorrichtung kann die Stellung des Betätigungskolbens ermittelt werden. Zusammen mit den Merkmalen des Anspruchs 1 kann durch diese Ausbildung sowohl das Vorhandensein des Spannzapfens wie auch dessen korrektes Festspannen am Spannfutter überprüft werden.

Vorzugsweise weist die Ventilvorrichtung ein Ventilgehäuse und einen zumindest abschnittsweise darin aufgenommenen Ventilkörper auf, welcher zur Änderung des Durchflusses des Fluids durch die Überwachungsleitung zwischen einer Sperrposition und einer Offenposition relativ zum Ventilgehäuse verschiebbar ist. Eine solche Ventilvorrichtung eignet sich insbesondere zur mechanischen Kopplung mit dem Betätigungskolben, so dass dieser die Ventilvorrichtung öffnen bzw. schliessen kann.

Besonders bevorzugt befindet sich der Ventilkörper bei korrekt in die Verriegelungsstellung verschobenem Betätigungskolben in der Offenposition, während er sich bei nicht korrekt in die Verriegelungsstellung verschobenem Betätigungskolben in der Sperrposition befindet. Damit wird die grundsätzliche Voraussetzung für eine positive Sicherheit geschaffen, indem der Ventilkörper nur dann die Offenposition einnimmt, wenn der Betätigungskolben die für ein sicheres Festspannen des Spannzapfens notwendige Verriegelungsstellung einnimmt. Sofern die Überwachungsleitung eingangsseitig mit Überdruck beaufschlagt wird, kann anhand eines Druckvergleichs vor und hinter dem Ventilkörper auf einfache Weise die Stellung des Ventilkörpers, und damit die Stellung des Betätigungskolbens, ermittelt werden.

Bei einer weiteren bevorzugten Weiterbildung des Spannfutters ist der Ventilkörper ortsfest angeordnet, während das Ventilgehäuse stoffschlüssig mit dem Betätigungskolben verbunden ist. Dadurch können einerseits die beweglichen Teile klein gehalten werden, was zu einer guten Platzausnutzung führt. Andererseits kann auch das radiale und axiale Spiel eines inneren Gehäuseteils klein gehalten werden, da bei einer kinematischen Umkehr, d.h. Ventilkörper beweglich und Gehäuse ortsfest angeordnet, aufgrund der Hebelwirkung das genannte Spiel vergrössert werden müsste. Zudem eignet sich diese Ausbildung insbesondere auch für eine Serieschaltung der Ventilvorrichtungen.

Bei einer besonders bevorzugten Weiterbildung umfasst das Ventilgehäuse einen ersten äusseren Teil und einen zweiten inneren Teil, wobei der äussere Teil stoffschlüssig mit dem Betätigungskolben verbunden ist, während der innere Teil formschlüssig mit dem äusseren Teil verbunden ist, und wobei der innere Teil mit radialem Spiel in dem äusseren Teil aufgenommen ist. Diese Ausbildung erlaubt, dass die Ventileinrichtung in radialer Richtung etwas Spiel ausgleichen und damit sicher funktionieren kann. Dies ist deshalb vorteilhaft, da der Betätigungskolben immer etwas radiales Spiel haben muss, damit er über einen langen Zeitraum zuverlässig funktioniert und sicher zwischen der Ausgangsstellung und der Verriegelungsstellung hin- und herbewegt werden kann.

Eine bevorzugte Weiterbildung des Spannfutters sieht vor, dass von der Oberseite her eine axiale Einlassbohrung in den Ventilkörper führt und von der Unterseite her eine axiale Auslassbohrung in den Ventilkörper führt, wobei die axiale Einlassbohrung in eine erste radiale Durchgangsbohrung mündet und wobei die axiale Auslassbohrung in eine zweite radiale Durchgangsbohrung mündet, und wobei die erste radiale Durchgangsbohrung oberhalb der zweiten radialen Durchgangsbohrung verläuft, und wobei der innere Teil des Ventilgehäuses mit einem Ringraum versehen, dessen axiale Länge zumindest dem Abstand zwischen den beiden radialen Durchgangsbohrungen entspricht und wobei sich der Ringraum über die beiden radialen Bohrungen erstreckt, wenn sich der Betätigungskolben in seiner Verriegelungsstellung befindet. Eine solche Ventilvorrichtung ist zuverlässig und einfach im Aufbau. Zudem kann damit die vorgängig erwähnte "floatende" Aufnahme des inneren im äusseren Gehäuseteil besonders gut realisiert werden.

Besonders bevorzugt ist die Überwachungsleitung zwischen dem Einlass und dem Auslass durchgehend offen aber gegenüber der Atmosphäre verschlossen, wenn in der Aufnahmeöffnung des Spannfutters ein Spannzapfen aufgenommen und mittels der Spannvorrichtung korrekt verriegelt ist. Auch diese Ausbildung begünstigt eine positive Sicherheit, indem nur dann ein ausreichender, vorbestimmter Druck ausgangsseitig aufgebaut werden kann, wenn ein Spannzapfen in dem jeweiligen Spannfutter aufgenommen und auch korrekt verriegelt ist.

Eine weitere Aufgabe der Erfindung besteht darin, eine Spanneinrichtung mit zumindest zwei nach einem der vorhergehenden Ansprüche ausgebildeten Spannfuttern zum Festspannen einer mit einer zu der Anzahl an Spannfuttern korrespondierenden Anzahl an Spannzapfen versehenen Palette derart weiterzubilden, dass auf einfache Weise überprüft werden kann, ob in sämtlichen Spannfuttern ein Spannzapfen aufgenommen ist.

Die Lösung der Aufgabe ist durch die Merkmale des Anspruchs 9 definiert. Dazu sind die Spannfutter der Spanneinrichtung in einem gemeinsam Spannuntersatz aufgenommen, wobei der Spannuntersatz mit einer von einem Einlass zu einem Auslass führenden, pneumatisch beaufschlagbaren Überwachungsleitung versehen ist, und wobei die Überwachungsleitung mit sämtlichen im Einführbereich des jeweiligen Spannfutters angeordneten Kontrollbohrungen verbunden ist.

Durch diese Ausbildung wird die grundsätzliche Möglichkeit geschaffen, mittels der Überwachungsleitung zu überprüfen, ob in sämtlichen Spannfuttern ein Spannzapfen aufgenommen ist, da nur dann ein ausreichender Druck in der Überwachungsleitung aufgebaut werden kann, wenn sämtliche Kontrollbohrungen von jeweils einem Spannzapfen verschlossen werden.

Ganz besonders bevorzugt weist jedes Spannfutter der Spanneinrichtung eine Ventilvorrichtung auf, mittels welcher der Durchfluss eines Fluids durch die Überwachungsleitung abhängig von der Stellung des Betätigungskolbens veränderbar ist, wobei die Ventilvorrichtungen zwischen dem Einlass und dem Auslass der Überwachungsleitung angeordnet und seriell derart miteinander verbunden sind, dass nur bei korrekter Verriegelung sämtlicher Betätigungskolben ein Durchgang zwischen dem Einlass und dem Auslass der Überwachungsleitung besteht. Bei dieser Ausbildung kann nur dann am Auslass der Überwachungsleitung ein ausreichender Überdruck aufgebaut werden, wenn sämtliche Spannzapfen korrekt verriegelt sind.

Eine weitere, besonders bevorzugte Weiterbildung sieht vor, dass im Bereich des jeweiligen Spannfutters eine pneumatische Nachspannleitung in einen oberhalb des jeweiligen Betätigungskolbens angeordneten Nachspannraum führt, wobei jede Nachspannleitung direkt oder indirekt mit der Überwachungsleitung verbunden ist. Diese Ausbildung ermöglicht, dass durch das Einleiten von Druckluft in die Überwachungsleitung sämtliche Betätigungskolben nachgespannt werden können. Da bei gattungsgemässen Spanneinrichtungen oft schon eine "Nachspannleitung" vorgesehen ist, kann die vorhandene Nachspannleitung gleichzeitig auch als Überwachungsleitung genutzt werden. Dazu müssen an bereits bestehenden Spanneinrichtungen vergleichsweise geringe Anpassungen vorgenommen werden, zumal die mit Kupplungen versehenen Ein- und Ausgänge auch schon existieren.

Eine weitere Aufgabe der Erfindung besteht darin, eine Spannfutteranordnung mit einem nach einem der Ansprüche 1 bis 8 ausgebildeten Spannfutter oder einer nach einem der Ansprüche 9 bis 12 ausgebildeten Spanneinrichtung zu realisieren, welche mit Mitteln zur Überwachung der Anwesenheit und des korrekten Spannens der mit einem Spannzapfen versehenen Palette im Spannfutter versehen ist bzw. Mittel zur Überwachung der Anwesenheit und des korrekten Spannens der mit mehreren Spannzapfen versehenen Palette in der Spanneinrichtung versehen ist.

Diese Aufgabe wird mit einer Spannfutteranordnung gemäss Anspruch 13 gelöst.

Indem die Spannfutteranordnung eine mit einer pneumatischen Druckquelle verbindbare Eingangsleitung aufweist, welche mit dem Einlass der durch den Spannuntersatz verlaufenden Überwachungsleitung verbunden ist, und indem die Überwachungsleitung auslassseitig mit einer Ausgangsleitung verbunden ist und die Ausgangsleitung mit zumindest einem Drucksensor zum Erfassen des auslassseitigen Drucks verbunden ist, kann mittels eines auslassseitigen Drucksensors die Anwesenheit und das korrekte Spannen einer Palette im Spannfutter oder der Spanneinrichtung überwacht werden.

Eine bevorzugte Weiterbildung der Spannfutteranordnung sieht vor, dass in der Eingangsleitung eine die durchströmende Luftmenge begrenzende Drossel angeordnet ist, wobei die Eingangsleitung mit einem ersten Drucksensor verbunden ist und die Ausgangsleitung mit einem zweiten und einem dritten Drucksensor zum Erfassen des auslassseitig in der Überwachungsleitung anstehenden Drucks verbunden ist, und wobei die Spannfutteranordnung eine Auswerteelektronik zum Erfassen und Auswerten der mittels den drei Drucksensoren ermittelten Drücke umfasst.

Indem in der Eingangsleitung eine die durchströmende Luftmenge begrenzende Drossel angeordnet ist und einerseits der Eingangsdruck erfasst und andererseits der in der Ausgangsleitung vorherrschende Druck mittels zwei Drucksensoren erfasst wird, kann eine zuverlässige Aussage darüber gemacht werden, ob die jeweilige Palette korrekt am Spannfutter bzw. an der Spanneinrichtung festgespannt ist, zumal ein Vergleich zwischen dem einlassseitigen und dem auslassseitigen Druck vorgenommen werden kann. Durch das Vorsehen von zwei auslassseitig angeordneten Drucksensoren ist die Überwachung zudem redundant.

Schliesslich besteht eine weitere Aufgabe der Erfindung darin, ein Verfahren zum Erfassen des Spannzustands einer auf einer Spannfutteranordnung nach Anspruch 13 oder 14 festgespannten Palette, vorzuschlagen, mit welchem ein zuverlässiges und sicheres Überwachen des Spannzustands ermöglicht wird. Diese Aufgabe wird durch die im Anspruch 15 angeführten Verfahrensschritte ermöglicht.

Um einen Druckaufbau in dem pneumatischen System zu ermöglichen, namentlich in der Überwachungsleitung mit den zugehörigen Komponenten, wird die Eingangsleitung mit Druck beaufschlagt und nach einer vorgegebenen Zeit der Druck in der Eingangsleitung gemessen und mit dem am Ausgang gemessenen Druck oder den am Ausgang gemessenen Drücken verglichen. Sofern zwischen Eingang und Ausgang eine Druckdifferenz von weniger als 25% gemessen wird, wird auf korrektes Festspannen der Palette erkannt. Beträgt hingegen die Druckdifferenz zwischen Eingang und Ausgang von mehr als 25%, so wird auf fehlerhaftes Festspannen der Palette erkannt. Vorgängige Angaben basieren auf bisherigen Erfahrungswerten. Je nach Grösse und Ausbildung des Spannfutters bzw. der Spanneinrichtung können diese Werte von vorgängig genannten Grössen abweichen. Wichtig ist insbesondere nur, dass ein deutlicher und sicher messbarer Unterschied zwischen einer korrekt und einer nicht korrekt gespannten Palette besteht.

Eine bevorzugte Weiterbildung des Verfahrens sieht vor, dass in der mit der Überwachungsleitung auslassseitig verbundenen Ausgangsleitung der Spannfutteranordnung zwei Drucksensoren zum Erfassen des Drucks angeordnet werden, wobei die Eingangsleitung mit Druck beaufschlagt wird und nach einer vorgegebenen Zeit der Druck in der Eingangsleitung gemessen und mit den mittels den beiden ausgangsseitig angeordneten Drucksensoren gemessenen Drücken verglichen wird, und dass bei einer gemessenen Druckdifferenz von mehr als 10% zwischen den beiden ausgangsseitig angeordneten Drucksensoren eine Fehlermeldung ausgegeben und/oder auf fehlerhaftes Festspannen der Palette erkannt wird. Auf diese Weise kann ein defekter Drucksensor erkannt werden, was zu einer erhöhnten Sicherheit in Bezug auf ein zuverlässiges Erfassen des Spannzustands beiträgt.

Die Figuren der zur Erläuterung eines Ausführungsbeispiels verwendeten Zeichnungen zeigen:
- Fig. 1: das Spannfutter zusammen mit einer Palette in perspektivischer Darstellung;
- Fig. 2: das Spannfutter gemäss Fig. 1 in teilweise geschnittener und perspektivischer Ansicht;
- Fig. 3: das Spannfutter gemäss Fig. 1 in einem alternativen Schnitt;
- Fig. 4: das Spannfutter zusammen mit einer daran festgespannten Palette in teilweise geschnittener und perspektivischer Ansicht;
- Fig. 5: das Spannfutter zusammen mit der daran festgespannten Palette gemäss Fig. 4 in einem alternativen Schnitt;
- Fig. 6: einen vergrösserten Ausschnitt aus der Fig. 4;
- Fig. 7: anhand eines vereinfachten Schemas eine mit dem Spannfutter versehene Spannfutteranordnung;
- Fig. 8: eine mit vier Spannfuttern versehene Spanneinrichtung;
- Fig. 9: anhand eines vereinfachten Schemas eine mit der Spanneinrichtung versehene Spannfutteranordnung.

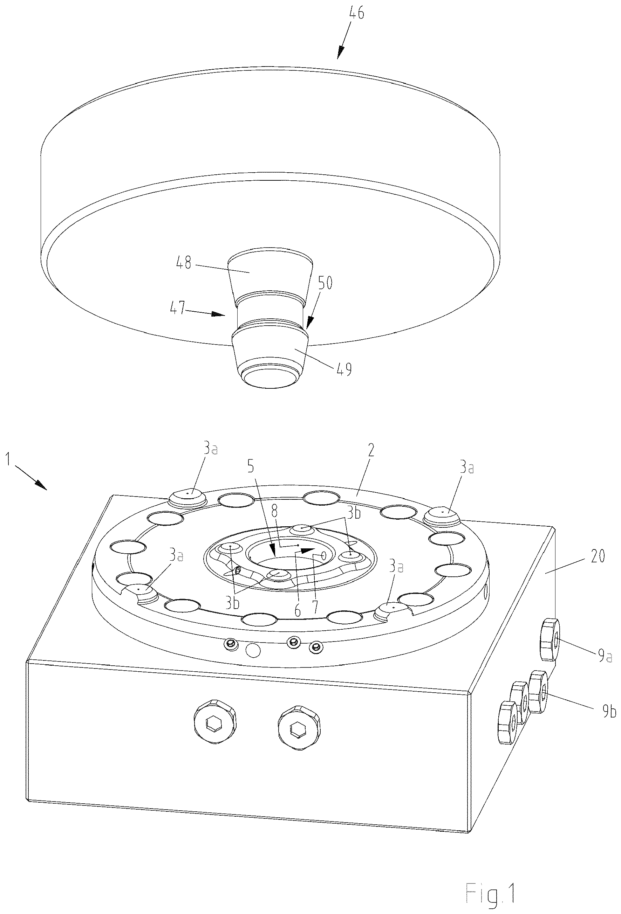

Die Fig. 1 zeigt das Spannfutter 1 zusammen mit einer Palette 46 in perspektivischer Ansicht. Die Palette 46 ist mit einem auf der Unterseite angeordneten Spannzapfen 47 versehen. Der Ausdruck Palette steht hier stellvertretend für jegliche Arten von Trägern, auf denen beispielsweise ein Werkzeug oder Werkstück befestigt werden kann. Das in einem Spannuntersatz 20 aufgenommene Spannfutter 1 umfasst eine kreisrunde Spannplatte 2, die mit einem hohlzylindrischen Fortsatz versehen ist, der sich vertikal nach unten bis in eine Aussparung des Spannuntersatzes 20 hinein erstreckt. Der Innenraum des hohlzylindrischen Fortsatzes bildet eine Aufnahmeöffnung 5 für den Spannzapfen 47.

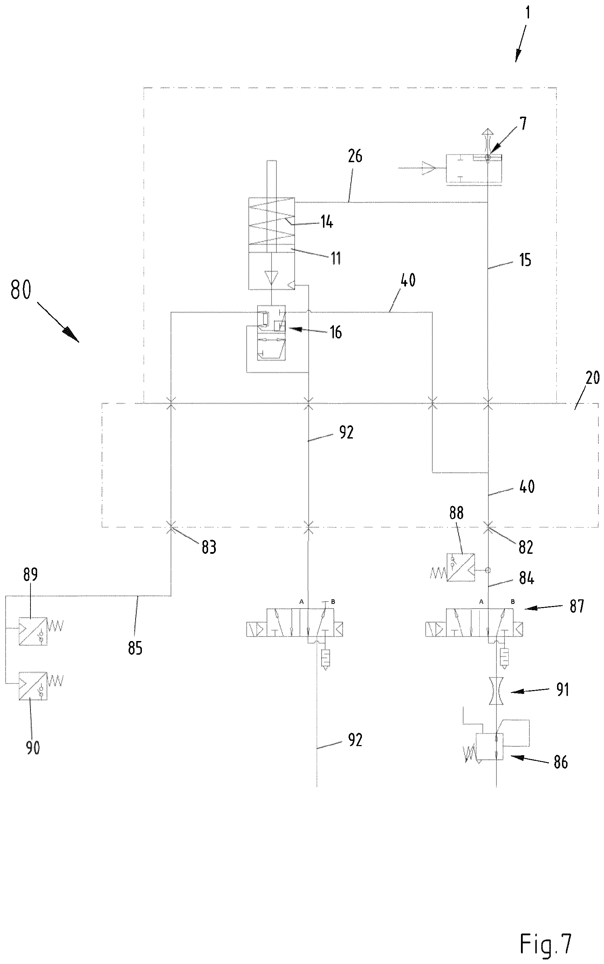

Die Spannplatte 2 ist auf der Oberseite mit äusseren und inneren Z-Auflagen 3a, 3b für die Palette 46 versehen, wobei sowohl die äusseren Z-Auflagen 3a wie auch die inneren Z-Auflagen 3b gleichmässig verteilt entlang eines Kreisringes angeordnet sind. Der Einführbereich 6 der Aufnahmeöffnung 5 ist konisch ausgebildet. In diesen Einführbereich 6 münden zwei Kontrollbohrungen, welche einander diametral gegenüberliegen und deren Funktion anschliessend noch näher erläutert wird, wobei aus dieser Darstellung nur eine der beiden Kontrollbohrungen 7 ersichtlich ist. Die Kontrollbohrungen 7 weisen bevorzugt einen Durchmesser zwischen ca. 2 und 3 mm auf. In den Einführbereich 6 der Aufnahmeöffnung 5 münden zudem mehrere Reinigungsbohrungen 8, welche der Reinigung eines konischen Zentrierbereichs 48 des Spannzapfens 47 dienen. Das Spannfutter 1 ist mit einer aus dieser Darstellung nicht ersichtlichen Spannvorrichtung versehen, welche kugelförmige Spannorgane zum Festspannen des Spannzapfens 47 in der Aufnahmeöffnung 5 aufweist. Zum Betätigen der Spannorgane umfasst die Spannvorrichtung einen zwischen einer Offen- und einer Verriegelungsstellung verschiebbaren Betätigungskolben. Der Spannuntersatz 20 ist mit einer Vielzahl von Kanälen und Leitungen versehen, welche mittels Kupplungen/Anschlüssen 9a, 9b in den Spannuntersatz 20 hinein bzw. hinausgeführt sind. Einer dieser Anschlüsse 9a bildet den Einlass für die Überwachungsleitung, während ein anderer Anschluss 9b den Auslass für die Überwachungsleitung bildet, wie nachfolgend anhand der Fig. 7 noch näher erläutert wird.

Der Spannzapfen 47 ist auf der der Palette 46 zugewandten Rückseite mit dem konischen Zentrierbereich 48 versehen, der auf den konischen Einführbereich 6 des Spannfutters 1 abgestimmt ist. Zum vorderen Ende hin ist der Spannzapfen 47 mit einem konischen Vorderteil 49 versehen, dessen Rückseite eine Schulter 50 bildet, an der die Spannorgane der Spannvorrichtung zum Einziehen und Festsetzen des Spannzapfens 47 im Spannfutter 1 angreifen können.

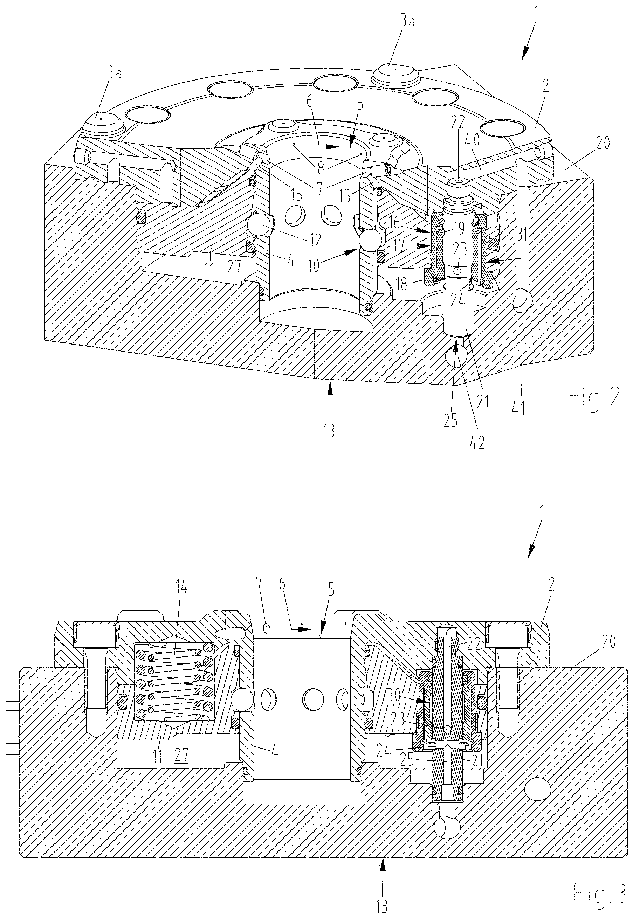

Die Figur 2 zeigt das sich in der Offenstellung befindliche Spannfutter 1 zusammen mit dem Spannuntersatz 20 in teilweise geschnittener und perspektivischer Ansicht. Da der grundsätzliche Aufbau eines derartigen Spannfutters bekannt ist, beispielsweise aus der EP 1 321 221 A1, wird nachfolgend nicht auf alle Elemente des Spannfutters eingegangen, sondern insbesondere auf einige im Zusammenhang mit der Erfindung wesentlichen Elemente. Aus dieser Darstellung sind u.a. der hohlzylindrische Fortsatz 4, die Aufnahmeöffnung 5 mit dem konischen Einführbereich 6, zwei Kontrollbohrungen 7, zwei Reinigungsbohrungen 8, die Spannvorrichtung 10, der Betätigungskolben 11, die kugelförmigen Spannorgane 12 der Spannvorrichtung 10 sowie ein Abschnitt der Überwachungsleitung 40 erkennbar. Der Betätigungskolben 11 ist mittels an der Spannplatte 2 abgestützten Druckfedern (nicht ersichtlich) in Richtung des Bodens des Spannuntersatzes 20 belastet. Der Betätigungskolben 11 ist zusammen mit den Spannorganen 12 in der Ausgangsstellung gezeigt, in welcher ein Spannzapfen in die Aufnahmeöffnung 5 eingeführt und auch daraus entnommen werden kann. Zwischen der Unterseite des Betätigungskolbens 11 und dem Boden des Spannuntersatzes 20 ist ein Druckraum 27 ausgebildet. Um den Betätigungskolben 11 entgegen der Kraft der Druckfedern in die gezeigte Ausgangsstellung zu bewegen, wird der Raum 27 mit Druckluft beaufschlagt und ein vorbestimmter Überdruck aufgebaut. Der Betätigungskolben 11 wird dadurch pneumatisch entgegen der Kraft der Druckfedern an einen oberen Anschlag gedrückt und in die hier dargestellte Ausgangsstellung verschoben. Um eine Palette mittels des Spannzapfens an dem Spannfutter 1 festzuspannen, muss der Überdruck im Druckraum 27 reduziert werden. Dazu wird der Druckraum 27 vorzugsweise zur Atmosphäre hin geöffnet. Sobald der Überdruck in dem Druckraum 27 unter einen bestimmten Wert sinkt, wird der Betätigungskolben 11 durch die Druckfedern nach unten in seine Verriegelungsstellung bewegt. Dabei werden die Spannorgane 12 radial nach innen in die Aufnahmeöffnung 5 verschoben, so dass ein in die Aufnahmeöffnung 5 eingesetzter Spannzapfen weiter in die Aufnahmeöffnung hinein, d.h. nach unten in Richtung des Bodens des Spannuntersatzes 20 gezogen und im Spannfutter 1 festgesetzt bzw. festgespannt wird. Die Spannvorrichtung 10 ist dabei derart ausgelegt, dass der Betätigungskolben 11 zusammen mit den Spannorganen 12 den Spannzapfen mittels Selbsthemmung in dem Spannfutter 1 festhält und verriegelt. Eine solche und an sich bekannte Spannvorrichtung 10 soll sicherstellen, dass die Palette im drucklosen Zustand des Spannfutters 1 festgespannt ist und bleibt.

Das Spannfutter 1 ist ausserdem mit einer Ventilvorrichtung 16 versehen, welche einen absperrbaren Durchlass in der Überwachungsleitung 40 bildet. Die Ventilvorrichtung 16 weist ein Ventilgehäuse 17 und einen abschnittweise darin aufgenommenen, im wesentlichen zylindrischen Ventilkörper 21 auf. Das Ventilgehäuse 17 umfasst einen ersten äusseren Teil 18 und einen zweiten inneren Teil 19, wobei der äussere Teil 18 stoffschlüssig mit dem Betätigungskolben 11 verbunden ist. Der innere Teil 19 des Gehäuses ist in axialer Richtung formschlüssig mit dem äusseren Teil 18 verbunden, wobei der innere Teil 19 mit radialem Spiel in dem äusseren Teil 18 aufgenommen ist. Beide Ventilgehäuseteile 18, 19 sind buchsenartig ausgebildet. Der Ventilkörper 21 ist zur Änderung des Durchflusses eines Fluids zwischen einer Sperrposition und einer Offenposition relativ zum Ventilgehäuse 17 verschiebbar gelagert. Als Fluid kommt vorzugsweise Luft bzw. Druckluft zum Einsatz. Der Ventilkörper 21 ist mittels einer Verschraubung fest mit der Spannplatte 2 verbunden, während der äussere Teil 18 des Ventilgehäuses 17 fest in einer Bohrung 31 des Betätigungskolbens 11 aufgenommen ist. Der Ventilkörper 21 ist mit einer axialen Einlassbohrung 22 versehen, welche von der Oberseite her in den Ventilkörper 21 führt und in etwa der Mitte des Ventilkörpers 21 über eine erste radiale Bohrung 23 wieder nach aussen führt. Die erste radiale Bohrung 23 führt diametral quer durch den Ventilkörper 21 und mündet auf beiden Seiten aus dem Ventilkörper 21. In den Ventilkörper 21 ist eine zweite radiale Bohrung 24 eingelassen, welche unterhalb der ersten Bohrung 23 angeordnet ist und ebenfalls radial quer durch den Ventilkörper 21 führt. Diese zweite radiale Bohrung 24 ist mit einer axialen Auslassbohrung 25 verbunden, welche nach unten aus dem Ventilkörper 21 hinausgeführt ist. In die Mantelfläche des Ventilkörpers 21 ist im Bereich der beiden radialen Bohrungen 23, 24 jeweils eine nut- bzw. schlitzförmige Vertiefung eingelassen. Auf der Innenseite ist der innere Teil 19 des Ventilgehäuses 17 mit einer Vertiefung versehen, welche einen den Ventilkörper 21 umgebenden Ringraum bildet, dessen axiale Länge zumindest dem Abstand zwischen den beiden radialen Durchgangsbohrungen 23, 24 entspricht. Der innere Teil 19 des Ventilgehäuses 17 ist in radialer Richtung schwimmend, d.h. mit etwas radialem Spiel in der Grössenordnung von einigen Zehntelmillimetern, in dem äusseren Teil 18 des Ventilgehäuses 17 geführt und aufgenommen, während er in axialer Richtung mit dem äusseren Teil 18 des Ventilgehäuses 17 mit etwas Spiel formschlüssig verbunden ist. Durch die schwimmende Lagerung des innere Teils 19 des Ventilgehäuses 17 kann insbesondere das radiale Spiel des Betätigungskolbens 11, welcher systembedingt in radialer Richtung mit etwas Spiel im Spannuntersatz 20 aufgenommen ist, ausgeglichen werden, da insbesondere nur der innere Teil 19 des Ventilgehäuses 17 im Zusammenhang mit dem Ventilkörper 21 für das Öffnen und Schliessen der Überwachungsleitung 40 funktionell massgebend ist.

Der im inneren Teil 19 des Ventilgehäuses 17 angeordnete Ringraum ist derart auf den Ventilkörper 21 abgestimmt, dass in einer vorbestimmten ersten Axialposition des Ventilkörpers 21 in Relation zu dem inneren Teil 19, die beiden radialen Bohrungen 23, 24 über den Ringraum miteinander verbunden sind, während in einer vorbestimmten zweiten Axialposition die beiden radialen Bohrungen 23, 24 nicht miteinander in Verbindung stehen, da sich zumindest die eine Bohrung, vorzugsweise jedoch beide Bohrungen 23, 24 in axialer Richtung unterhalb des Ringraums im Bereich eines den Ringraum nach unten hin begrenzenden ringförmigen Vorsprungs im inneren Teil 19 befindet bzw. befinden. Dieser letztgenannte Zustand stellt sich ein, wenn sich der Betätigungskolben 11 in der dargestellten Ausgangsstellung befindet. In der Verriegelungsstellung hingegen sind die beiden radialen Bohrungen 23, 24 über den Ringraum miteinander verbunden, wie anschliessend anhand der Fig. 3 noch näher erläutert wird. Wenn die beiden radialen Bohrungen 23, 24 über den Ringraum miteinander verbunden sind, so befindet sich die Ventilvorrichtung 16 in der Offenstellung, d.h. der Einlass der Überwachungsleitung 40 ist über die Ventilvorrichtung 16 mit deren Auslass pneumatisch verbunden, da sich der Ringraum in axialer Richtung über die beiden radialen Bohrungen 23, 24 erstreckt. Vereinfacht ausgedrückt ist die Überwachungsleitung 40 zwischen Einlass und Auslass durch die Ventilvorrichtung gesperrt, wenn sich der Betätigungskolben 11 ausserhalb der Verriegelungsstellung befindet, während die Überwachungsleitung 40 zwischen Einlass und Auslass durchgehend offen ist, wenn sich der Betätigungskolben 11 in der Verriegelungsstellung befindet.

Die Überwachungsleitung 40 steht zudem mit zumindest einer Kontrollleitung 15 in Verbindung, welche die beiden in dem konischen Einführbereich 6 der Aufnahmeöffnung angeordneten Kontrollbohrungen 7 mit der Überwachungsleitung 40 verbindet. Sofern kein Spannzapfen in der Aufnahmeöffnung 5 aufgenommen ist, sind die beiden Kontrollbohrungen 7 offen, während bei korrekt in der Aufnahmeöffnung aufgenommenem Spannzapfen die beiden Kontrollbohrungen 7 durch den konischen Zentrierbereich des Spannzapfens verschlossen sind. Durch diese Ausbildung des Spannfutters kann über den gemessenen Druck am Ausgang der Überwachungsleitung 40 erkannt werden, ob der Spannzapfen korrekt in der Aufnahmeöffnung 5 aufgenommen ist und ob sich der Verriegelungskolben 11 in der Verriegelungsstellung befindet.

Die Fig. 3 zeigt das Spannfutter gemäss Fig. 2 in einem alternativen Schnitt. In dieser Darstellung ist eine von mehreren Druckfedern 14 ersichtlich, welche den Betätigungskolben 11 nach unten in Richtung seiner Verriegelungsstellung drücken. Ausserdem sind die von der Oberseite her axial in den Ventilkörper 21 führende Einlassbohrung 22, die erste radiale Bohrung 23, die zweite radiale Bohrung 24 und die axial nach unten aus dem Ventilkörper 21 herausführende Auslassbohrung 25 ersichtlich. Zudem ist der den Ventilkörper 21 umgebende Ringraum 30 erkennbar. In diesem Zustand, in dem sich der Betätigungskolben 11 in seiner nach oben verschobenen Ausgangsstellung befindet, besteht kein Durchlass zwischen der Einlassbohrung 22 und der Auslassbohrung 25, da sich der Ringraum 30 oberhalb der beiden radialen Bohrungen 23, 24 befindet. Eine den Ringraum 30 nach unten hin begrenzende Erhebung des inneren Gehäuseteils umschliesst die Mantelfläche des Ventilkörpers 21 oberhalb der beiden radialen Bohrungen 23, 24. Abgesehen von minimalen Leckagen über bestehende Spaltmasse besteht somit keine pneumatische Verbindung zwischen den beiden radialen Bohrungen 23, 24.

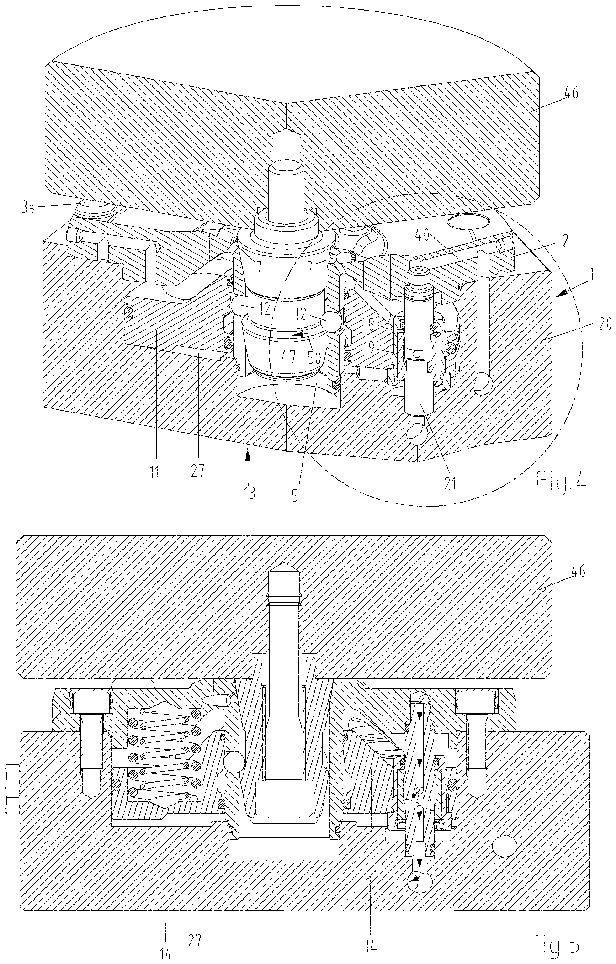

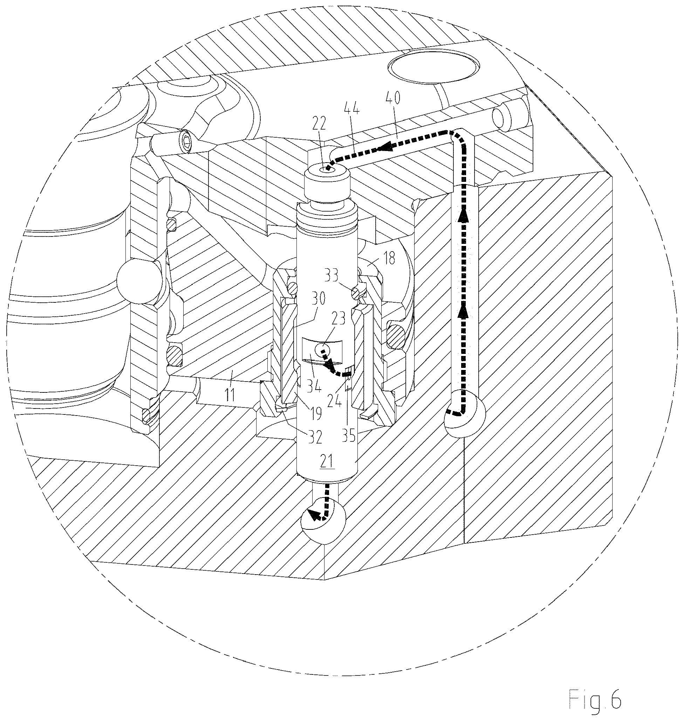

Die Fig. 4 zeigt das Spannfutter 1 zusammen mit einer daran festgespannten Palette 46 in einem Schnitt und in perspektivischer Darstellung. Nachdem der mit der Palette 46 verbundene Spannzapfen 47 in die Aufnahmeöffnung 5 eingeführt und die Palette 46 auf das Spannfutter 1 aufgesetzt ist, wird die Palette 46 an dem Spannfutter 1 festgespannt. Dazu wird der Überdruck im Druckraum 27 reduziert, vorzugsweise wird der Druckraum zur Atmosphäre hin geöffnet, so dass deren Druck auf den Umgebungsdruck absinkt. Dies bewirkt, dass der Betätigungskolben 11 unter der Wirkung der Druckfedern nach unten in seine Wirkstellung bewegt wird. Beim Herunterfahren drückt der Betätigungskolben 11 die Spannorgane 12 nach innen, welche sich dann ihrerseits an der Schulter 50 des Spannzapfens 47 anlegen, und den Spannzapfen 47 nach unten gegen den Boden des Spannuntersatzes 20 drücken. Die Palette 46 liegt mit ihrer Unterseite auf den erhöhten Z-Auflagen 3a des Spannfutters 1 auf. Mit dem Herunterfahren des Betätigungskolbens 11 bewegt sich auch das Ventilgehäuse, namentlich der äussere Teil 18 und der innere Teil 19 relativ zu dem Ventilkörper 21, welcher an der Spannplatte 2 befestigt ist und keine Bewegung ausführt. Durch diese Relativbewegung zwischen dem inneren Teil 19 des Ventilgehäuses und dem Ventilkörper 21 wird die Ventilvorrichtung in die Offenstellung bewegt, wie anschliessend anhand der Fig. 6 noch näher erläutert wird.

Die Fig. 5 zeigt das Spannfutter zusammen mit der daran festgespannten Palette 46 gemäss Fig. 4 in einem Querschnitt. Aus dieser Darstellung sind u.a. zwei der Druckfedern 14 erkennbar, welche den Betätigungskolben 11 nach unten in seine End- bzw. Verriegelungsstellung drücken.

Die Fig. 6 zeigt einen vergrösserten Ausschnitt aus der Fig. 4. In dieser Darstellung ist der im inneren Teil 19 des Ventilgehäuses angeordnete Ringraum 30 erkennbar. Bei vollständig heruntergeschobenem Betätigungskolben 11 kommt der Ringraum 30 über den beiden radialen Bohrungen 23, 24 des Ventilkörpers 21 zu liegen. Indem der Ringraum 30 über den beiden radialen Bohrungen 23, 24 liegt und der Ventilkörper 21 im Bereich der radialen Bohrungen 23, 24 mit nutförmigen Schlitzen 34, 35 versehen ist, besteht eine pneumatische Verbindung zwischen der ersten 23 und der zweiten radialen Bohrung 24 und damit zwischen der axialen Einlassbohrung 22 und der axialen Auslassbohrung des Ventilkörpers 21. Zudem ist durch eine gestrichelte Linie 44 mit Pfeilen angedeutet, dass aus der Überwachungsleitung 40 von oben in den Ventilkörper 21 einströmende Luft über den Ringraum 30 von der ersten radialen Bohrung 23 in die zweite radiale Bohrung 24 und damit von der axialen Einlassbohrung 22 in die axiale Auslassbohrung 25 (Fig. 3) strömen kann. Von der axialen Auslassbohrung kann die Luft in der Überwachungsleitung 40 in Richtung des Auslasses weiterströmen. Im unteren Bereich ist der äussere Teil 18 des Ventilgehäuses mit einem Sicherungsring 32 versehen, der als axiale Mitnehmerscheibe für den inneren Teil 19 des Ventilgehäuses bei einer nach oben gerichteten Bewegung des äusseren Gehäuseteils 18 dient. Zudem ist erkennbar, dass der äussere Teil 18 des Ventilgehäuses auf seiner Innenseite mit einem Dichtring 33 versehen ist, der dichtend an der Mantelfläche des Ventilkörpers 21 anliegt.

Die Fig. 7 zeigt anhand eines vereinfachten Schemas das vorgängig erläuterte Spannfutter 1 zusammen mit dem Spannuntersatz 20 sowie weitere Elemente einer mit dem Spannfutter 1 versehenen Spannfutteranordnung 80. Die genannten weiteren Elemente sind üblicherweise Bestandteil oder gehören zur Peripherie einer Bearbeitungsmaschine, auf welcher das Spannfutter zum Einsatz kommt. Neben dem Spannfutter 1 umfasst die Spannfutteranordnung 80 einen eingangsseitig mit der Überwachungsleitung 40 verbundenen ersten Drucksensor 88 sowie zwei ausgangsseitig mit der Überwachungsleitung 40 verbundene weitere Drucksensoren 89, 90. Die Überwachungsleitung 40 führt von einem Einlass 82 in den Spannuntersatz 20, wobei von der Überwachungsleitung 40 nach dem Einlass 82 eine Kontrollleitung 15 abzweigt, welche ebenfalls als Bestandteil der Überwachungsleitung 40 anzusehen ist. In dieser Darstellung sind zudem der Betätigungskolben 11 der Spannvorrichtung, eine der Druckfedern 14, die dem Absperren der Überwachungsleitung 40 dienende Ventilvorrichtung 16 sowie eine von vorzugsweise zwei in der Aufnahmeöffnung angeordnete Kontrollbohrungen 7 schematisch dargestellt. Zudem ist eine von der Kontrollleitung 15 abzweigende Nachspannleitung 26 erkennbar, welche in einen oberhalb des Betätigungskolbens 11 angeordneten Nachspannraum führt. Sofern die Kontrollbohrung(en) 7 von einem Spannzapfen verschlossen sind, kann mittels einer eingangsseitig angeschlossenen Druckquelle ein ausreichender Druck in der Überwachungsleitung 40 aufgebaut werden, welcher auch zum Nachspannen des Betätigungskolbens 11 in der Verriegelungsstellung genutzt werden kann. Da das Nachspannen des Betätigungskolbens 11 und das Erfassen des auslassseitigen Drucks mehr oder weniger zeitgleich erfolgen können, braucht die Spannfutteranordnung hierzu nur mit je einem Einlass- und Auslass für die Überwachungsleitung 40, welche gleichzeitig auch als pneumatische Nachspann-Leitung dient, versehen zu werden.

Die Spannfutteranordnung 80 umfasst noch zahlreiche weitere Elemente wie beispielsweise einen Druckregler 86, Steuerelemente 87, eine Drossel 91 sowie eine pneumatische Druckleitung 92. Über die Druckleitung 92 kann der Raum 27 unterhalb des Betätigungskolbens 11 unter Druck gesetzt werden, so dass der Betätigungskolben 11 entgegen der Kraft der Druckfedern 14 in seine Ausgangsstellung verschoben werden kann. Der eingangsseitige Druckregler 86 ist über eine Leitung 84 mit dem Einlass 82 verbunden, während von dem Auslass 83 eine Leitung 85 zu den beiden ausgangsseitig parallel angeordneten Drucksensoren 89, 90 führt. Weitere Elemente wie beispielsweise eine mit der Leitung 84 verbundene pneumatische Druckquelle oder eine Auswerteelektronik sind zugunsten einer übersichtlichen Darstellung nicht eingezeichnet. Sowohl der eingangsseitig angeordnete erste Drucksensor 88 wie auch die beiden ausgangsseitig mit der Überwachungsleitung 40 verbundenen weiteren Drucksensoren 89, 90 sind mit der Auswerteelektronik verbunden. Indem auslassseitig zwei Drucksensoren 89, 90 vorgesehen sind, kann ein Quervergleich des an dem jeweiligen Drucksensor 89, 90 anstehenden Drucks gemacht und im Falle einer einen bestimmten Grenzwert überschreitenden Abweichung eine Fehlermeldung ausgegeben werden. Jedenfalls kann durch die beiden ausgangsseitig angeordneten Drucksensoren 89, 90 eine erhöhte Sicherheit erreicht und ein defekter Drucksensor erkannt werden.

Die Funktionsweise der Spannfutteranordnung 80 im Hinblick auf eine Überwachung der Anwesenheit und des korrekten Festspannens einer Palette wird nachfolgend anhand verschiedener Varianten näher erläutert, wobei bei allen Varianten davon ausgegangen wird, dass der unterhalb des jeweiligen Betätigungskolbens 11 angeordnete Druckraum 27 nicht mit Überdruck beaufschlagt ist.

### Variante 1: Keine Palette vorhanden

Bei dieser Variante wird davon ausgegangen, dass keine Palette und damit auch kein Spannzapfen am Spannfutter 1 bzw. in der Aufnahmeöffnung aufgenommen ist. Um zu überprüfen, ob eine Palette mittels des Spannzapfens korrekt im Spannfutter 1 festgespannt ist, wird die Überwachungsleitung 40 über die Leitung 84 eingangsseitig mit einem Überdruck pneumatisch beaufschlagt. Nach einer vorbestimmten Zeit X, beispielsweise nach 3-5 Sekunden, wird sowohl der an der eingangsseitigen Verbindungsleitung 84 anstehende Druck, wie auch der an der ausgangsseitigen Verbindungsleitung 85 anstehende Druck mit den jeweiligen Drucksensoren 88, 89, 90 gemessen. Sofern kein Spannzapfen in der Aufnahmeöffnung aufgenommen ist, entweicht die in die Überwachungsleitung 40 einströmende Luft über die Kontrollbohrung(en) 7 in die Atmosphäre. Da die in die Überwachungsleitung 40 einströmende Luftmenge durch die eingangsseitige Drossel 91 begrenzt wird, kann bei fehlendem Spannzapfen nur ein geringer Überdruck in der Überwachungsleitung 40 aufgebaut werden, der jedenfalls deutlich unterhalb des für eine korrekte Spannung definierten Grenzwerts von ca. 4,5 bar liegt.

Die Dimensionierung der Drossel ergibt sich aus der Fähigkeit der Luftversorgung, den Eingangsdruck zu halten, sowie aus der Leitungslänge und dem Leitungsquerschnitt zwischen den Steuerelementen 87 und dem Einlass 82. Die Drossel muss also so weit verschlossen werden dass selbst bei kurzen grossen Leitungen und sehr stabiler Luftversorgung das Fehlen des Spannzapfens zu einem erheblichen Druckabfall führt und durch tiefen Druck am Auslass 83 sicher erkannt werden kann. Die Drossel wird so eingestellt, dass bei fehlendem Spannzapfen und korrekt verriegeltem Spannfutter der Druck am Auslass 83 kleiner oder gleich 2 bar ist.

Bei fehlendem Spannzapfen steht an den beiden ausgangsseitig angeordneten Drucksensoren 89, 90 somit ein Druck an, der wesentlich tiefer ist als der eingangsseitig mittels des Druckreglers 86 voreingestellte Druck von beispielsweise 6 bar. Sofern sich der Betätigungskolben 11 in der Verrieglungsstellung befindet, steht zwar der Ventilkörper der Ventilvorrichtung 16 in der Offenposition, da jedoch die in die Überwachungsleitung 40 einströmende Luft über die Kontrollbohrung(en) 7 entweicht, messen die ausgangsseitigen Drucksensoren 89, 90 einen Druck, der deutlich unterhalb des eingestellten Drucks von 6 bar ist. Messungen haben ergeben, dass ohne Spannzapfen ausgangsseitig ein Druck in der Grössenordnung von ca. 1,5 bis 2,5 bar ansteht. Es versteht sich, dass der ausgangsseitig gemessene Druck neben dem eingangsseitig eingestellten Überdruck von verschiedenen weiteren Parametern wie beispielsweise Anzahl und Durchmesser der Kontrollbohrung(en) 7, eingespeistes Luftvolumen, Leckage im System, Durchmesser der Überwachungsleitung 40, Verengungen bzw. Drosselstellen zwischen Ein- und Ausgang etc. abhängt. Der Durchmesser der im Einführbereich des Spannfutters angeordneten Kontrollbohrung(en) 7 wird jedenfalls so gewählt, dass einerseits eine genügend grosse Luftmenge über die Kontrollbohrung(en) 7 entweichen kann, so dass beim Fehlen eines Spannzapfens ein deutlicher Druckabfall entsteht, dass andererseits die Kontrollbohrung(en) 7 mittels des Spannzapfens zuverlässig abgedichtet werden kann/können. Wichtig ist insbesondere, dass mittels des ausgangsseitig gemessen Drucks eine eindeutige Unterscheidung zwischen einer korrekt gespannten Palette und einer nicht korrekt gespannten oder nicht vorhandenen Palette gemacht werden kann. Vorzugsweise werden die verschiedenen Zustände mittels Tests erfasst und dem jeweiligen Zustand ein Druckbereich zugeordnet. Ohne die eingangsseitige Drossel 91 bestünde die Gefahr, dass bei fehlendem Spannzapfen kein genügend grosser Druckunterschied zwischen Eingang und Ausgang anstehen würde, da bei kurzen Leitungen und einem grossen eingespeisten Luftvolumen der gemessene Ausgangsdruck ggf. derart hoch sein könnte, dass keine sichere Unterscheidung zwischen Spannzapfen vorhanden und Spannzapfen nicht vorhanden gemacht werden könnte.

Sofern kein Spannzapfen in der Aufnahmeöffnung aufgenommen ist und das einströmende Luftvolumen durch die eingangsseitige Drossel wie beschrieben begrenzt wird, entweicht der Druck über die Kontrollbohrung(en) 7. Dabei spielt es keine Rolle, ob sich die Ventilvorrichtung 16 bzw. deren Ventilkörper in der Sperrposition oder Offenposition befindet, da in beiden Fällen an den ausgangsseitig angeordneten Drucksensoren 89, 90 ein Druck ansteht, der deutlich unterhalb des Nenndrucks von 6 bar ist. Jedenfalls wird mittels der nicht näher dargestellten Auswerteelektronik erkannt, dass an den beiden Drucksensoren 89, 90 ein Druck ansteht, der nicht dem der für eine sichere Spannung notwendigen Überdruck von beispielsweise 4,5 bar bzw. 450 kPa entspricht.

### Variante 2: Palette inkl. Spannzapfen vorhanden aber nicht korrekt festgespannt

Bei dieser Variante wird davon ausgegangen, dass eine Palette auf dem Spannfutter 1 aufliegt und deren Spannzapfen in der Aufnahmeöffnung aufgenommen ist. Sofern ein Spannzapfen in der Aufnahmeöffnung des Spannfutters aufgenommen ist, wird/werden die Kontrollbohrung(en) 7 durch den konischen Zentrierbereich des Spannzapfens verschlossen. Solange sich jedoch der Betätigungskolben 11 nicht in der Verriegelungsstellung befindet, indem er beispielsweise verklemmt ist, nimmt die Ventilvorrichtung 16 die Sperrposition ein und an den beiden ausgangsseitig mit der Überwachungsleitung 40 verbundenen Drucksensoren 89, 90 steht wiederum ein Druck an, der wesentlich tiefer ist als der mittels des Druckreglers 86 eingestellte Eingangs-Nenndruck von 6 bar. Wenn der Ventilkörper der Ventilvorrichtung 16 die Sperrposition einnimmt, steht an den beiden Drucksensoren 89, 90 daher ein Druck an, der im Wesentlichen dem Umgebungsdruck entspricht. Allerdings kann aufgrund einer gewissen Leckage der Ventilvorrichtung 16 der gemessene Ausgangsdruck durchaus etwas höher sein, als der Umgebungsdruck; in jedem Fall dürfte der Druck in der ausgangsseitigen Verbindungsleitung 85 jedoch unterhalb von 2 bar liegen.

Gesetzt den Fall, dass sich der Betätigungskolben 11 bereits in der Verriegelungsstellung befindet, bevor eine Palette auf das Spannfutter 1 aufgesetzt und deren Spannzapfen in die Aufnahmeöffnung eingeführt wird, so kann der Spannzapfen nicht vollständig in die Aufnahmeöffnung eingeführt werden, da sich die Spannorgane in der vorgeschobenen Verriegelungsstellung (Fig. 6) befinden, wodurch ein vollständiges Einführen des Spannzapfens verhindert wird, da der Vorderteil 49 des Spannzapfens 47 (Fig. 1) an den Spannorganen ansteht und ein vollständiges Einführen nicht möglich ist. Dadurch wird/werden die Kontrollbohrung(en) 7 von dem Spannzapfen auch nicht verschlossen und der eingangsseitig erzeugte Druck kann über die Kontrollbohrung(en) 7 entweichen. Auch in diesem Fall steht an den beiden ausgangsseitigen Drucksensoren 89, 90 ein Druck an, der unterhalb von 2 bar liegt. Daher wird auch in diesem Fall mittels der Auswerteelektronik erkannt, dass kein korrektes Spannen und Verriegeln einer Palette erfolgt ist.

### Variante 3: Palette korrekt im Spannfutter festgespannt

Bei dieser Variante wird davon ausgegangen, dass die Palette auf dem Spannfutter 1 aufliegt und deren Spannzapfen mittels der Spannvorrichtung festgespannt und korrekt verriegelt ist. Der Betätigungskolben 11 befindet sich in seiner unteren Verriegelungsstellung, in welcher er die Spannorgane nach innen in die Aufnahmeöffnung drückt. Die Spannorgane liegen an der Schulter des Spannzapfens an und ziehen diesen zusammen mit der Palette mit einer hohen Kraft nach unten, so dass die Unterseite der Palette fest auf den erhöhten Z-Auflagen des Spannfutters 1 aufliegt. Dadurch werden auch sämtliche im Einführbereich der Aufnahmeöffnung angeordneten Kontrollbohrungen 7 von dem konischen Zentrierbereich des Spannzapfens dicht verschlossen. In der Verriegelungsstellung des Betätigungskolbens 11 sind die beiden radialen Bohrungen 23, 24 im Ventilkörper 21 der Ventilvorrichtung über den Ringraum 30 des inneren Teils 19 (Fig. 6) des Ventilgehäuses miteinander verbunden. Dadurch ist der Einlass 82 der Überwachungsleitung 40 mit deren Auslass 83 verbunden.

Unter Berücksichtigung der Leckage des Systems steht bei korrekter Verriegelung eines Spannzapfens an den beiden ausgangsseitig mit der Überwachungsleitung 40 verbundenen Drucksensoren 89, 90 ein Druck in der Grössenordnung von ca. 4,5 bis 5,5 bar an, wenn eingangsseitig mittels des Druckreglers 86 ein Nenndruck von 6 bar eingestellt ist. Um auf korrektes Spannen der Palette zu erkennen, muss einerseits mittels den beiden ausgangsseitigen Drucksensoren 89, 90 ein Druck gemessen werden, der zumindest 75% des eingangsseitig eingestellten und ggf. gemessenen Drucks beträgt.

Zudem darf an den beiden ausgangsseitig mit der Überwachungsleitung 40 verbundenen Drucksensoren 89, 90 eine Druckdifferenz von höchstens 10% anstehen bzw. gemessen werden, da ansonsten eine Fehlermeldung ausgegeben und/oder auf fehlerhaftes Festspannen der Palette erkannt wird.

Sofern die Überwachungsleitung 40 keine Leckage hätte, sondern vollständig abgedichtet wäre, würde nach einer bestimmten Zeit, d.h. wenn der Druck in der Überwachungsleitung 40 vollständig aufgebaut ist, an den beiden ausgangsseitig in der Überwachungsleitung angeordneten Drucksensoren 89, 90 theoretisch der eingestellte Nenndruck von 6 bar anstehen. Da derartige pneumatische Systeme jedoch eine gewisse Leckage haben, steht am Ausgang ein Druck an, der bis ca. 25% tiefer ist als der eingestellte Nenndruck. Sofern die Druckdifferenz zwischen Eingang 84 und Ausgang 85 weniger als 25% beträgt, wird auf korrektes Festspannen der Palette erkannt, während bei einer Druckdifferenz zwischen Eingang 84 und Ausgang 84 von mehr als 25% auf fehlerhaftes Festspannen der Palette erkannt wird. Das System ist im vorliegenden Fall jedoch so ausgelegt, dass bei fehlendem Spannzapfen die Druckdifferenz zwischen Eingang 84 und Ausgang 85 ca. 50% beträgt.

Somit kann festgehalten werden, dass im Fall eines korrekten Spannens und Verriegelns einer mit einem Spannzapfen versehenen Palette, bei einem Eingangsdruck von 6 bar, an den beiden ausgangsseitig in der Überwachungsleitung angeordneten Drucksensoren 89, 90 ein Druck in der Grössenordnung von ca. 4,5 bis 5,5 bar ansteht, während bei nicht Vorhandensein eines Spannzapfens oder bei nicht korrekter Verriegelung desselben ein Druck von weniger als 3 bar ansteht. Dieser Unterschied ist jedenfalls gross genug, um mittels der Auswerteelektronik entscheiden zu können, ob eine Palette korrekt gespannt ist oder nicht. Während der genannte Unterschied, insbesondere der am Ausgang gemessenen Druck, bei einem neuen Spannfutter eher im Maximalbereich anzusiedeln ist, kann dieser Unterschied im Dauereinsatz des Spannfutters ggf. etwas kleiner werden, wobei Messungen ergeben haben, dass auch nach über 50'000 Spannvorgängen der Unterschied noch immer gross genug ist, um sicher unterscheiden zu können, ob eine Palette korrekt gespannt ist oder nicht.

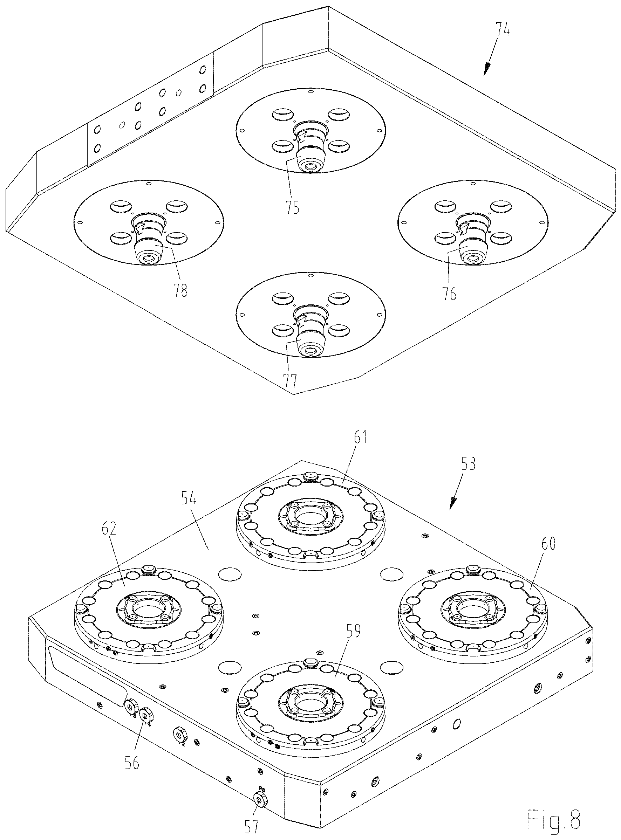

Die Fig. 8 zeigt ein weiteres Ausführungsbeispiel der Erfindung, namentlich eine Spanneinrichtung 53, mit einem vier Spannfutter 59, 60, 61, 62 aufweisenden Spannuntersatz 54 zum Festspannen eines Werkstückträgers 74. Jedes der Spannfutter 59, 60, 61, 62 ist gemäss dem vorgängig erläuterten Ausführungsbeispiel ausgebildet, weshalb nachfolgend nicht mehr detailliert auf das jeweilige Spannfutter 59, 60, 61, 62 als solches eingegangen wird. Der Werkstückträger 74 ist auf seiner Unterseite mit vier korrespondierend zu den Spannfuttern 59, 60, 61, 62 angeordneten Spannzapfen 75, 76, 77, 78 versehen. Beim Festspannen an der Spanneinrichtung 53 kommt die Unterseite des Werkstückträgers 74 auf den Z-Auflagen des jeweiligen Spannfutters 59, 60, 61, 62 zur Anlage. Im Spannuntersatz 54 verläuft wiederum eine von einer eingangsseitig angeordneten Kupplung 57 zu einer ausgangsseitig angeordneten Kupplung 56 führende Überwachungsleitung.

Die vier Ventilvorrichtungen der vier Spannfutter 59, 60, 61, 62 sind seriell miteinander verbunden, d.h. der Ausgang der ersten Ventilvorrichtung ist mit dem Eingang der zweiten Ventilvorrichtung verbunden, deren Ausgang ist mit dem Eingang der dritten Ventilvorrichtung verbunden, während der Ausgang der dritten Ventilvorrichtung mit dem Eingang der vierten Ventilvorrichtung verbunden ist. Der Eingang der ersten Ventilvorrichtung ist mit dem Eingang der Überwachungsleitung verbunden, während der Ausgang der vierten Ventilvorrichtung mit dem Ausgang der Überwachungsleitung verbunden ist. Somit ist der Eingang der Überwachungsleitung über die vier seriell miteinander verbundenen Ventilvorrichtungen mit dem Ausgang der Überwachungsleitung verbunden. Von der Überwachungsleitung zweigt zwischen deren Eingang und der ersten Ventilvorrichtung eine weitere Leitung ab, von welcher wiederum vier Kontrollleitungen abzweigen, die zu der/den im Einführbereich des jeweiligen Spannfutters 59, 60, 61, 62 angeordneten Kontrollbohrung(en) führen. Sämtliche Kontrollbohrungen sind somit parallel miteinander verbunden.

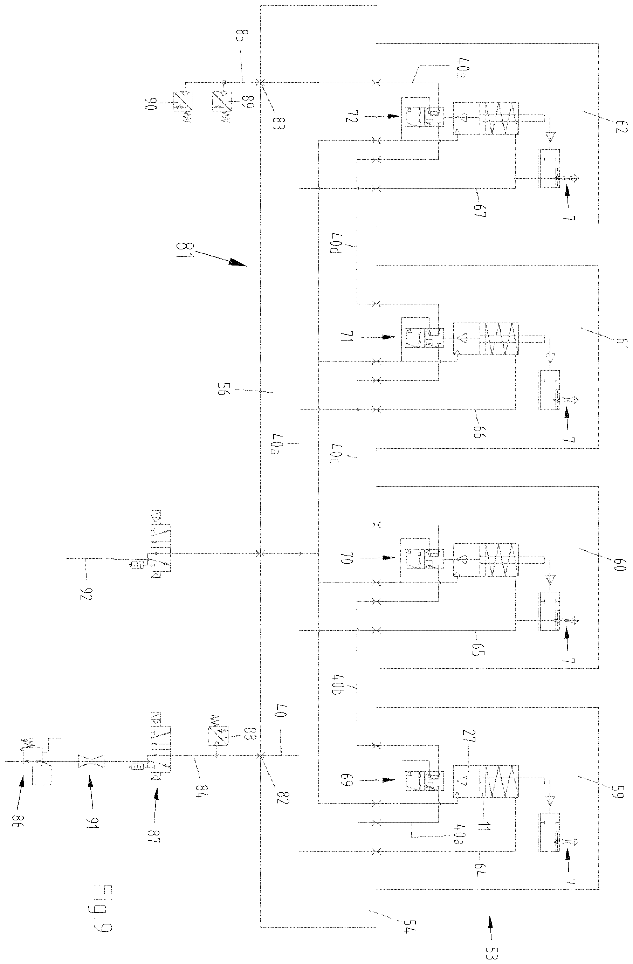

Die Fig. 9 zeigt anhand eines vereinfachten Schemas weitere Elemente einer mit der vorgängig erläuterten Spanneinrichtung 53 versehenen zweiten Spannfutteranordnung 81. Die genannten weiteren Elemente sind wiederum Bestandteil oder gehören zur Peripherie einer Bearbeitungsmaschine, auf welcher die Spanneinrichtung 53 zum Einsatz kommt. In diesem Beispiel wird davon ausgegangen, dass eine Bearbeitungsmaschine zum Einsatz kommt, wie sie bereits anhand der Fig. 7 erläutert wurde. Die maschinenseitig vorgesehenen Elemente und Leitungen tragen daher die gleichen Bezugszeichen wie bei der ersten Spannfutteranordnung 80. Die Spanneinrichtung 53 umfasst vier auf dem Spannuntersatz 54 angeordnete Spannfutter 59, 60, 61 62.

Die von dem Einlass 82 zu dem Auslass 83 durch die Spanneinrichtung 53 führende Überwachungsleitung trägt einlassseitig das Bezugszeichen 40. Einzelne Teilabschnitte der Überwachungsleitung sind mit den Bezugszeichen 40a-40e versehen.

Neben der Spanneinrichtung 53 umfasst die zweite Spannfutteranordnung 81 wiederum einen eingangsseitig mit der Überwachungsleitung 40 verbundenen ersten Drucksensor 88 sowie zwei ausgangsseitig mit der Überwachungsleitung 40e verbundene weitere Drucksensoren 89, 90. Jedes der vier Spannfutter 59, 60, 61, 62 ist mit einem mittels Druckfedern belasteten Betätigungskolben sowie je einer Ventilvorrichtung 69, 70, 71, 72 versehen. In die Aufnahmeöffnung des jeweiligen Spannfutters 59, 60, 61, 62 mündet wiederum je zumindest eine Kontrollbohrung 7, vorzugsweise sind jedoch zwei Kontrollbohrungen 7 pro Spannfutter 59, 60, 61, 62 vorgesehen. Als weitere Elemente der Spannfutteranordnung 81 sind wiederum ein Druckregler 86, Steuerelemente 87, eine Drossel 91 sowie eine Druckleitung 92, über welche der Raum unterhalb des jeweiligen Betätigungskolbens 11 unter Druck gesetzt werden kann, ersichtlich. Der eingangsseitige Druckregler 86 ist über die Leitung 84 mit dem Einlass 82 verbunden, während von dem Auslass 83 die Leitung 85 zu den beiden ausgangsseitig parallel angeordneten Drucksensoren 89, 90 führt. Weitere Elemente wie beispielsweise die Auswerteelektronik sind zugunsten einer übersichtlichen Darstellung nicht dargestellt. Sowohl der eingangsseitige Drucksensor 88 wie auch die beiden ausgangsseitig mit der Überwachungsleitung verbundenen Drucksensoren 89, 90 sind an der Auswerteelektronik angeschlossen.

Die Überwachungsleitung 40 ist mit den Kontrollbohrungen 7 aller Spannfutter 59, 60, 61, 62 verbunden. Dazu zweigt nach dem Einlass 82 eine Verbindungsleitung 40a von der Überwachungsleitung 40 ab, wobei die Verbindungsleitung 40a auch als Teil der Überwachungsleitung 40 anzusehen ist. Von dieser Verbindungsleitung 40a zweigt im Bereich des jeweiligen Spannfutters 59, 60, 61, 62 nochmals je eine Kontrollleitung 64, 65, 66, 67 ab, welche zu der Kontrollbohrung 7 bzw. zu den Kontrollbohrungen des zugehörigen Spannfutters 59, 60, 61, 62 führt. Wie anhand des ersten Spannfutters 59 ersichtlich ist, führt von der jeweiligen Kontrollleitung 64 zudem eine Leitung in den Raum oberhalb des Betätigungskolbens 11 des Spannfutters 59. Dadurch kann die Überwachungsleitung 40 auch genutzt werden, um den Betätigungskolben 11 nach unten in Richtung seiner Verriegelungsstellung zu belasten, was insbesondere zum Nachspannen des jeweiligen Verriegelungskolbens 11 nach dem Festspannen eines Spannzapfens genutzt werden kann. Wichtig ist jedoch, dass keine Druckluft in den Nachspannraum geleitet wird, solang das Spannfutter offen bleiben soll. Sofern in jedem Spannfutter 59, 60, 61, 62 ein Spannzapfen aufgenommen ist, kann in der Überwachungsleitung 40 ein ausreichender Druck aufgebaut werden und durch das Einleiten von Druckluft können gleichzeitig auch sämtliche Betätigungskolben 11 nachgespannt werden. Im umgekehrten Fall kann eine bereits vorhandene "Nachspannleitung", wie sie bei gattungsgemässen Spanneinrichtungen oft bereits vorgesehen ist, auch dazu genutzt werden, um die Anwesenheit der Spannzapfen zu überprüfen. Dazu müssen die Spannfutter 59, 60, 61, 62 erfindungsgemäss ausgestaltet und die entsprechenden Leitungen mit der Nachspannleitung verbunden werden.

Zudem ist erkennbar, dass die vier Ventilvorrichtungen 69, 70, 71, 72 seriell miteinander verbunden sind und der Einlass 82 der Überwachungsleitung 40 über die vier Ventilvorrichtungen 69, 70, 71, 72 mit dem Auslass 83 der Überwachungsleitung 40 verbunden ist. Dazu ist die Verbindungsleitung 40a im Bereich des ersten Spannfutters 59 mit dem Eingang der ersten Ventilvorrichtung 69 verbunden. Der Ausgang der ersten Ventilvorrichtung 69 ist über die Leitung 40b mit dem Eingang der zweiten Ventilvorrichtung 70 verbunden, deren Ausgang ist über die Leitung 40c mit dem Eingang der dritten Ventilvorrichtung 71 verbunden. Der Ausgang der dritten Ventilvorrichtung 71 ist über die Leitung 40d mit dem Eingang der vierten Ventilvorrichtung 72 verbunden. Vom Ausgang der vierten Ventilvorrichtung 72 führt die Leitung 40e, welche ebenfalls als Teil der Überwachungsleitung 40 anzusehen ist, zu dem Auslass 83.

Die Funktionsweise der Spannfutteranordnung 81 im Hinblick auf eine Überwachung der Anwesenheit und des korrekten Festspannens einer Palette ist grundsätzlich dieselbe, wie bei dem vorgängig beschriebenen Beispiel, mit dem Unterschied, dass sämtliche Spannfutter 59, 60, 61, 62 überwacht werden. Nachfolgend werden wiederum verschiedene Varianten erläutert, wobei teilweise nur auf die Bezugszeichen des ersten Spannfutters 59 Bezug genommen wird, da die vier Spannfutter identisch ausgebildet sind. Bei allen Varianten wird davon ausgegangen, dass der unterhalb des jeweiligen Betätigungskolbens 11 angeordnete Druckraum 27 nicht mit Überdruck beaufschlagt ist.

### Variante 1: Keine Palette vorhanden

Bei dieser Variante wird davon ausgegangen, dass keine Palette auf die Spanneinrichtung 53 aufgesetzt ist. Ohne Palette ist auch in keinem der Spannfutter 59, 60, 61, 62 ein Spannzapfen aufgenommen. Um zu überprüfen, ob eine Palette mittels den vier Spannzapfen korrekt in der Spanneinrichtung 53 festgespannt ist, wird die Überwachungsleitung 40 über die eingangsseitige Verbindungsleitung 84 pneumatisch mit Überdruck beaufschlagt. Sofern in keinem der Spannfutter 59, 60, 61, 62 ein Spannzapfen aufgenommen ist, entweicht die in die Überwachungsleitung 40 einströmende Luft über die Kontrollbohrung(en) 7 des jeweiligen Spannfutters 59 in die Atmosphäre. Da die in die Überwachungsleitung 40 einströmende Luftmenge durch die eingangsseitige Drossel 91 begrenzt wird, kann bei zumindest einem fehlendem Spannzapfen nur ein geringer Überdruck in der Überwachungsleitung 40 aufgebaut werden, der jedenfalls deutlich unterhalb des für eine korrekte Spannung definierten Grenzwerts von ca. 4,5 bar liegt. An den beiden ausgangsseitig mit der Überwachungsleitung 40e verbundenen Drucksensoren 89, 90 steht somit ein Druck an, der wesentlich tiefer ist als der mittels des Druckreglers 86 eingangsseitig eingestellte Druck von 6 bar. Sofern sich der Betätigungskolben 11 des jeweiligen Spannfutters 59 in der Verrieglungsstellung befindet, steht zwar der Ventilkörper der jeweiligen Ventilvorrichtung 69, 70, 71, 72 in der Offenposition, da jedoch die in die Überwachungsleitung 40 einströmende Luft über die Kontrollbohrungen 7 entweicht, messen die ausgangsseitigen Drucksensoren 89, 90 einen Druck, der weit unterhalb des eingestellten Drucks von 6 bar ist. Der ausgangsseitig gemessene Druck ist, wie vorgängig bereits erwähnt, von verschiedenen weiteren Parametern abhängig. Wichtig ist jedoch auch hier, dass mittels des ausgangsseitig gemessen Drucks eine eindeutige Unterscheidung zwischen einer korrekt gespannten Palette und einer nicht korrekt gespannten oder nicht vorhandenen Palette gemacht werden kann. Vorzugsweise werden auch bei dieser Spanneinrichtung 53 die verschiedenen Zustände mittels Tests erfasst und dem jeweiligen Zustand ein Druckbereich zugeordnet. Jedenfalls kann mittels der nicht näher dargestellten Auswerteelektronik erkannt werden, dass bei der Variante 1 an den beiden Drucksensoren 89, 90 ein Druck ansteht, der nicht dem der für eine sichere Spannung notwendigen Überdruck von zumindest 4,5 bar bzw. 450 kPa entspricht.

### Variante 2: Palette vorhanden aber mindestens ein Spannzapfen fehlt

Bei dieser Variante wird davon ausgegangen, dass eine Palette auf der Spanneinrichtung aufliegt, aber zumindest ein Spannzapfen fehlt, wodurch in zumindest einem der Spannfutter 59, 60, 61, 62 kein Spannzapfen aufgenommen ist. Auch in diesem Fall entweicht die eingeleitete Druckluft über die Kontrollbohrung(en) desjenigen Spannfutters, in dem kein Spannzapfen aufgenommen ist. Da die in die Überwachungsleitung 40 einströmende Luftmenge durch die eingangsseitige Drossel 91 begrenzt wird, kann bei einem fehlendem Spannzapfen wiederum nur ein geringer Überdruck in der Überwachungsleitung 40 aufgebaut werden.

Die Drossel ist so dimensioniert, dass bei genau einem fehlenden Spannzapfen und korrekt verriegelten Spannfuttern der Druck am Auslass 83 kleiner oder gleich 2 bar ist.

Daher wird auch in diesem Fall, unabhängig von der Stellung der Betätigungskolben 11 und der jeweils zugehörigen Ventilvorrichtung 69, 70, 71, 72, von den beiden ausgangsseitigen Drucksensoren 89, 90 ein Druck gemessen, der unterhalb von ca. 2 bar liegt. Mittels der Auswerteelektronik wird daher erkannt, dass an den beiden Drucksensoren 89, 90 ein Druck ansteht, der nicht dem für eine sichere Spannung notwendigen Überdruck entspricht.

### Variante 3: Palette inkl. aller Spannzapfen vorhanden aber nicht korrekt festgespannt

Bei dieser Variante wird davon ausgegangen, dass eine mit vier Spannzapfen versehene Palette auf den vier Spannfuttern 59, 60, 61, 62 der Spanneinrichtung 53 aufliegt und alle vier Spannzapfen in der Aufnahmeöffnung des jeweiligen Spannfutters 59, 60, 61, 62 aufgenommen sind. Durch den jeweiligen Spannzapfen wird/werden die Kontrollbohrung(en) des jeweiligen Spannfutters verschlossen. Solange sich jedoch zumindest ein Betätigungskolben nicht in der Verriegelungsstellung befindet, indem beispielsweise der Betätigungskolben 11 des ersten Spannfutters 59 verklemmt ist, nimmt die zugehörige Ventilvorrichtung 69 die Sperrposition ein und der Durchgang in der Überwachungsleitung ist an der entsprechenden Stelle versperrt. Da die vier Ventilvorrichtungen 69, 70, 71, 72 seriell miteinander verbunden sind, steht an den beiden ausgangsseitig mit der Überwachungsleitung 40 verbundenen Drucksensoren 89, 90 wiederum ein Druck an, der wesentlich tiefer ist als der mittels des Druckreglers 86 eingestellte Eingangs-Druck von 6 bar. Wenn zumindest eine der vier Ventilvorrichtungen 69, 70, 71, 72 die Sperrposition einnimmt, steht an den beiden Drucksensoren 89, 90 ein Druck an, der im Wesentlichen dem Umgebungsdruck entspricht, jedenfalls jedoch unterhalb von 2 bar liegt. Mittels der Auswerteelektronik wird daher erkannt, dass kein sicheres Festspannen des Werkstückträgers erfolgt ist.

Gesetzt den Fall, dass sich zumindest einer der Betätigungskolben 11 der vier Spannfutter 59, 60, 61 62 bereits in der Verriegelungsstellung befindet, bevor eine Palette auf die Spanneinrichtung 53 aufgesetzt und deren Spannzapfen in die Aufnahmeöffnung des jeweiligen Spannfutters 59, 60, 61, 62 eingeführt wird, so kann der Spannzapfen bei demjenigen Spannfutter, das sich in der Verriegelungsstellung befindet, nicht vollständig in die Aufnahmeöffnung eingeführt werden, wie dies bereits vorgängig anhand der Fig. 7 (Variante 2) erläutert wurde. Auch in diesem Fall wird mittels der Auswerteelektronik erkannt, dass kein sicheres Festspannen des Werkstückträgers erfolgt ist.

### Variante 4: Palette mittels sämtlichen Spannzapfen korrekt im Spannfutter festgespannt.

Bei dieser Variante wird davon ausgegangen, dass die Palette auf der Spanneinrichtung 53 aufliegt und die vier Spannzapfen mittels den vier Spannfuttern 59, 60, 61, 62 festgespannt und korrekt verriegelt sind. Der Betätigungskolben des jeweiligen Spannfutters befindet sich dabei in seiner unteren Verriegelungsstellung, in welcher er die Spannorgane nach innen in die Aufnahmeöffnung drückt. Die Spannorgane liegen an der Schulter des jeweiligen Spannzapfens an und ziehen diesen zusammen mit der Palette mit einer hohen Kraft nach unten, so dass die Unterseite der Palette fest auf den erhöhten Z-Auflagen der vier Spannfutter 59, 60, 61, 62 der Spanneinrichtung 53 aufliegt. Dadurch werden sämtliche im Einführbereich der jeweiligen Aufnahmeöffnung angeordneten Kontrollbohrungen 7 von dem konischen Zentrierbereich des entsprechenden Spannzapfens dicht verschlossen. Da sich die Betätigungskolben 11 sämtlicher vier Spannfutter 59, 60, 61, 62 in der Verriegelungsstellung befinden, sind auch die beiden radialen Bohrungen im jeweiligen Ventilkörper über den Ringraum des inneren Einsatzes (Fig. 6) miteinander verbunden und sämtliche vier Ventilvorrichtungen 69, 70, 71, 72 befinden sich in der Offenstellung. Dadurch ist die Einlassseite 82 der Überwachungsleitung 40 über die vier Ventilvorrichtungen 69, 70, 71, 72 mit deren Auslassseite 83 verbunden.

Unter Berücksichtigung der Leckage des Systems steht bei korrekter Verriegelung der vier Spannzapfen an den beiden ausgangsseitig in der Überwachungsleitung angeordneten Drucksensoren 89, 90 ein Druck in der Grössenordnung von ca. 4,5 bis 5,5 bar an und die Auswerteelektronik erkennt auf korrektes Festspannen der Palette.

Zusammenfassend kann festgehalten werden, dass im Fall eines korrekten Spannens und Verriegelns der mit vier Spannzapfen versehenen Palette, bei einem Eingangsdruck von 6 bar, an den beiden ausgangsseitig in der Überwachungsleitung angeordneten Drucksensoren 89, 90 ein Druck in der Grössenordnung von ca. 4,5 bis 5,5 bar ansteht, während bei nicht Vorhandensein von zumindest einem Spannzapfens oder bei nicht korrekter Verriegelung von zumindest einem Spannzapfen ein Druck von weniger als 2 bar ansteht. Anhand dieses Unterschieds kann mittels der Auswerteelektronik sicher erkannt werden, ob die Palette korrekt gespannt wurde oder nicht. Auch hier kann wieder erwähnt werden, dass bei einer korrekt gespannten Palette der am Ausgang gemessene Druck, bei einem neuen Spannfutter eher im oberen Bereich, d.h. zwischen ca. 5 und 5,5 bar anzusiedeln ist, während er nach mehreren tausend oder zehntausend Spannvorgängen tendenziell etwas tiefer ist und bei ca. 4,5 bis 5 bar liegen dürfte. In jedem Fall ist aber der auslassseitig anstehende Druck im Fall des korrekten Spannens einer Palette noch immer gross genug, um sicher entscheiden zu können, dass die Palette auch korrekt gespannt ist.

Die in die Überwachungsleitung 40 eingespeiste Druckluft kann ausserdem dazu genutzt werden, Auflageflächen auf der Unterseite der Palette und/oder am Spannzapfen mittels abblasen zu reinigen. Dazu muss zumindest ein Ventil vorgesehen werden, mittels welchem die in die Überwachungsleitung 40 eingeleitete Druckluft zu den Reinigungsbohrungen 8 (Fig. 1) umgeleitet wird. Da gemäss dem Stand der Technik ausgebildete Spannsysteme zumeist bereits mit einer pneumatischen Kupplung oder einem pneumatischen Anschluss zum Einleiten von Druckluft zum Abblasen/Reinigen der Auflageflächen versehen sind, können auch bestehende Bearbeitungsmaschinen vergleichsweise einfach nachgerüstet werden. Auch ist bei den gemäss dem Stand der Technik ausgebildeten Spannsystemen üblicherweise auch auslassseitig bereits eine pneumatische Kupplung oder ein pneumatischer Anschluss vorgesehen, welcher mit dem Auslass der einen und/oder anderen Leitung verbunden ist.

Es versteht sich, dass das vorgängige Ausführungsbeispiel nicht abschliessend ist, sondern dass im Rahmen der Erfindung durchaus abweichende Ausführungen möglich sind. So könnte beispielsweise anstelle von zwei Kontrollbohrungen eine davon abweichende Anzahl von Kontrollbohrungen pro Spannfutter vorgesehen werden. Das Vorsehen von zumindest zwei Kontrollbohrungen pro Spannfutter hat den Vorteil, dass bei fehlendem Spannzapfen ein erhöhter Volumenstrom erreicht wird und somit ein grösseres messbares ΔP erreicht wird.

Auch wenn vorgängig nur Spannsysteme mit einem oder vier Spannfuttern erläutert wurden, so können natürlich auch Spannsysteme mit zwei, drei, fünf oder mehr Spannfuttern erfindungsgemäss gestaltet und das korrekte Spannen einer Palette überwacht werden.

Indem die Drossel derart dimensioniert ist, dass bei genau einem fehlenden Spannzapfen und korrekt verriegeltem Spannfutter bzw. korrekt verriegelten Spannfuttern der Druck am Auslass 83 kleiner oder gleich 2 bar ist, wird bei zumindest einem fehlenden Spannzapfen ausgangsseitig ein Druck gemessen, der kleiner oder gleich 2 bar ist. Somit wird unabhängig von der Anzahl an Spannfuttern bei zumindest einem fehlenden Spannzapfen ausgangsseitig immer ein Druck gemessen, der kleiner oder gleich 2 bar ist.

Einige Vorteile des erfindungsgemäss gestalteten Spannfutters sind nachfolgend kurz zusammengefasst:
- Bei einem erfindungsgemäss gestalteten Spannfutter kann das korrekte Festspannen einer Palette im Spannfutter sicher überwacht werden;
- Auch das Fehlen des Spannzapfens, und damit der Palette, kann zuverlässig erkannt werden;
- Bei einer mit mehreren Spannfuttern versehenen Spanneinrichtung zum Festspannen einer mit mehreren Spannzapfen versehenen Palette kann sowohl die Anwesenheit sämtlicher Spannzapfen wie auch deren korrektes Festspannen sicher überwacht werden;
- Ein erfindungsgemäss gestaltetes Spannfutter bzw. eine erfindungsgemäss gestaltete Spanneinrichtung eignen sich für den Dauereinsatz und funktionieren langzeitstabil;
- Es müssen vergleichsweise wenige mechanische Komponenten vorgesehen werden;
- Bestehende Bearbeitungsmaschinen können vergleichsweise einfach und kostengünstig mit einem erfindungsgemäss gestalteten Spannfutter oder einer erfindungsgemäss gestalteten Spanneinrichtung nach- oder ausgerüstet werden.

| | | | |
|---|---|---|---|
| 1. | Spannfutter | 51. | |
| 2. | Spannplatte 2 | 52. | |
| 3. | 3a innere Z-Auflagen / 3b äussere Z-Auflagen | 53. | Spanneinrichtung |
| 4. | hohlzylindrischer Fortsatz | 54. | Spannuntersatz |
| 5. | Aufnahmeöffnung | 55. | Gehäuse Spannuntersatz |
| 6. | Einführbereich (konisch) | 56. | Kupplung Einlass |
| 7. | Kontrollbohrung | 57. | Kupplung Auslass |
| 8. | Reinigungsbohrung | 58. | |
| 9. | Kupplungen | 59, | erstes Spannfutter |
| 10. | Spannvorrichtung | 60. | zweites Spannfutter |
| 11. | Betätigungskolben | 61. | drittes Spannfutter |
| 12, | Spannorgane (Kugeln) | 62. | viertes Spannfutter |
| 13. | | 63. | |
| 14. | Druckfeder | 64. | erste Kontrollleitung |
| 15. | Kontrollleitung | 65. | zweite Kontrollleitung |
| 16, | Ventilvorrichtung | 66. | dritte Kontrollleitung |
| 17. | Ventilgehäuse | 67. | vierte Kontrollleitung |
| 18. | äusserer Teil (Ventilgehäuse) | 68. | |
| 19. | innerer Teil (Ventilgehäuse) | 69. | erste Ventilvorrichtung |
| 20. | Spannuntersatz | 70. | zweite Ventilvorrichtung |
| 21. | Ventilkörper | 71. | dritte Ventilvorrichtung |
| 22. | axiale Einlassbohrung | 72. | vierte Ventilvorrichtung |
| 23. | erste radiale Bohrung | 73. | |
| 24. | zweite radiale Bohrung | 74. | Werkstückträger |
| 25. | axiale Auslassbohrung | 75. | erster Spannzapfen |
| 26. | Nachspannleitung | 76. | zweiter Spannzapfen |
| 27. | Raum unterhalb Betätigungskolben | 77. | dritter Spannzapfen |
| 28. | Raum oberhalb Betätigungskolben (Nachspannen) | 78. | vierter Spannzapfen |
| 29. | | 79. | |
| 30. | Ringraum | 80. | erste Spannfutteranordnung |
| 31. | Bohrung Betätigungskolben | 81. | zweite Spannfutteranordnung |
| 32. | Sprengring | 82. | Einlass |
| 33. | Dichtung | 83. | Auslass |
| 34. | schlitzförmige Ausnehmung | 84. | Verbindungsleitung eingangsseitig |
| 35. | schlitzförmige Ausnehmung | 85. | Verbindungsleitung ausgangsseitig |
| 36. | Stufenbohrung Grundkörper | 86. | Druckregler |
| 37. | obere Dichtung Ventilkörper | 87. | Steuerelemente |
| 38, | untere Dichtung Ventilkörper | 88. | Druck-Sensor eingangsseitig |
| 39. | Dichtung äussere Buchse | 89. | erster Druck-Sensor ausgangsseitig |
| 40. | Überwachungsleitung | 90. | zweiter Druck-Sensor ausgangsseitig |
| 41. | Eingang Überwachungsleitung | 91. | Drossel |
| 42 | Ausgang Überwachungsleitung | 92. | Druckleitung Verriegelung lösen |
| 43. | Abzweigung Überwachungsleitung | 93. | Auslass |
| 44. | gestrichelte Linie | 94. | |
| 45. | | 95. | |
| 46. | Palette | 96. | |
| 47. | Spannzapfen | 97. | |
| 48. | hinterer Zentrierbereich | 98. | |
| 49. | Vorderteil | 99. | |
| 50. | Schulter | 100. | |

## Patentansprüche

1. Spannfutter (1) zum Festspannen von mit einem Spannzapfen (47) versehenen Paletten (46), wobei das Spannfutter (1) mit einer Aufnahmeöffnung (5) für den Spannzapfen (47) und einer Spannorgane (12) aufweisenden Spannvorrichtung (10) zum Festspannen des Spannzapfens (47) in der Aufnahmeöffnung (5) versehen ist, wobei das Spannfutter (1) mit einer von einem Einlass (82) zu einem Auslass (83) führenden, pneumatisch beaufschlagbaren Überwachungsleitung (40) versehen ist, die mit einem Drucksensor (88, 89, 90) verbunden ist, und die Aufnahmeöffnung (5) einen konischen Einführbereich (6) aufweist, in den zumindest eine mit der Überwachungsleitung (40) verbundene Kontrollbohrung (7) mündet, welche mittels des Spannzapfens (47) verschliessbar ist.

2. Spannfutter (1) nach Anspruch 1, wobei die Spannvorrichtung (10) einen zwischen einer Ausgangsstellung und einer Verriegelungsstellung verschiebbaren Betätigungskolben (11) zum Betätigen der Spannorgane (12) aufweist, wobei das Spannfutter (1) eine zwischen dem Einlass (82) und dem Auslass (83) der Überwachungsleitung (40) angeordnete Ventilvorrichtung (16) aufweist, mittels welcher der Durchfluss eines Fluids durch die Überwachungsleitung (40) abhängig von der Stellung des Betätigungskolbens (11) veränderbar ist.

3. Spannfutter (1) nach Anspruch 2, wobei die Ventilvorrichtung (16) ein Ventilgehäuse (17) und einen zumindest abschnittsweise darin aufgenommenen Ventilkörper (21) aufweist, wobei zur Änderung des Durchflusses des Fluids das Ventilgehäuse (17) relativ zum Ventilkörper (21) oder der Ventilkörper (21) relativ zum Ventilgehäuse (17) zwischen einer Sperrposition und einer Offenposition verschiebbar ist.

4. Spannfutter (1) nach Anspruch 3, wobei der Ventilkörper (21) oder das Ventilgehäuse (17) derart mit dem Betätigungskolben (11) gekoppelt ist, dass sich die Ventilvorrichtung (16) bei korrekt in die Verriegelungsstellung verschobenem Betätigungskolben (11) in der Offenposition befindet, während sich die Ventilvorrichtung (16) bei nicht korrekt in die Verriegelungsstellung verschobenem Betätigungskolben (11) in der Sperrposition befindet.

5. Spannfutter (1) nach Anspruch 3 oder 4, wobei der Ventilkörper (21) ortsfest angeordnet ist, während das Ventilgehäuse (17) stoffschlüssig mit dem Betätigungskolben (11) verbunden ist.

6. Spannfutter (1) nach Anspruch 5, wobei das Ventilgehäuse(17) einen ersten äusseren Teil (18) und einen zweiten inneren Teil (19) umfasst, wobei der äussere Teil (18) stoffschlüssig mit dem Betätigungskolben (11) verbunden ist, während der innere Teil (19) in axialer Richtung formschlüssig mit dem äusseren Teil (18) verbunden ist, und wobei der innere Teil (19) mit radialem Spiel in dem äusseren Teil (18) aufgenommen ist.

7. Spannfutter (1) nach einem der Ansprüche 3 bis 6, wobei von der Oberseite her eine axiale Einlassbohrung (22) in den Ventilkörper (21) führt und von der Unterseite her eine axiale Auslassbohrung (25) in den Ventilkörper (21) führt, wobei die axiale Einlassbohrung (22) in eine erste radiale Durchgangsbohrung (23) mündet und wobei die axiale Auslassbohrung (25) in eine zweite radiale Durchgangsbohrung (24) mündet, und wobei die erste radiale Durchgangsbohrung (23) oberhalb der zweiten radialen Durchgangsbohrung (24) verläuft, und wobei der innere Teil des Ventilgehäuses (19) mit einem Ringraum (30) versehen ist, dessen axiale Länge zumindest dem Abstand zwischen den beiden radialen Durchgangsbohrungen (23, 24) entspricht, und wobei sich der Ringraum (30) über die beiden radialen Bohrungen (23, 24) erstreckt, wenn sich der Betätigungskolben (11) in seiner Verriegelungsstellung befindet.

8. Spannfutter (1) nach einem der Ansprüche 2 bis 7, wobei die Überwachungsleitung (40) zwischen dem Einlass (82) und dem Auslass (83) durchgehend offen aber gegenüber der Atmosphäre verschlossen ist, wenn in der Aufnahmeöffnung (5) des Spannfutters (1) ein Spannzapfen (47) aufgenommen und mittels der Spannvorrichtung (10) korrekt verriegelt ist.

9. Spanneinrichtung (53) mit zumindest zwei nach einem der vorhergehenden Ansprüche ausgebildeten Spannfuttern (59, 60, 61, 62) zum Festspannen einer Palette (74), welche eine zur der Anzahl von Spannfuttern (59, 60, 61, 62) korrespondierende Anzahl von Spannzapfen (75, 76, 77, 78) aufweist, wobei die Spannfutter (59, 60, 61, 62) in einem gemeinsam Spannuntersatz (54) aufgenommen sind und der Spannuntersatz (54) mit einer von einem Einlass (82) zu einem Auslass (83) führenden, pneumatisch beaufschlagbaren Überwachungsleitung (40) versehen ist, die mit dem Drucksensor (88, 89, 90) verbunden ist, welche mit sämtlichen im Einführbereich des jeweiligen Spannfutters (59, 60, 61, 62) angeordneten Kontrollbohrungen (7) verbunden ist.

10. Spanneinrichtung (53) nach Anspruch 9, wobei die Spannvorrichtung (10) einen zwischen einer Ausgangsstellung und einer Verriegelungsstellung verschiebbaren Betätigungskolben (11) zum Betätigen der Spannorgane (12) aufweist und wobei jedes Spannfutter (59, 60, 61, 62) eine Ventilvorrichtung (69, 70, 71, 72) aufweist, mittels welcher der Durchfluss eines Fluids durch die Überwachungsleitung (40) abhängig von der Stellung des jeweiligen Betätigungskolbens (11) veränderbar ist, wobei die Ventilvorrichtungen (69, 70, 71, 72) zwischen dem Einlass (82) und dem Auslass (83) der Überwachungsleitung (40) angeordnet und seriell derart miteinander verbunden sind, dass nur bei korrekter Verriegelung sämtlicher Betätigungskolben (11) ein Durchgang zwischen dem Einlass (82) und dem Auslass (83) der Überwachungsleitung (40) besteht.

11. Spanneinrichtung nach Anspruch 9 oder 10, mit einem zwischen einer Ausgangsstellung und einer Verriegelungsstellung verschiebbaren Betätigungskolben (11) zum Betätigen der Spannorgane (12), wobei im Bereich des jeweiligen Spannfutters (59, 60, 61, 62) eine pneumatische Nachspannleitung in einen oberhalb des jeweiligen Betätigungskolbens (11) angeordneten Nachspannraum führt, wobei jede Nachspannleitung direkt oder indirekt mit der Überwachungsleitung (40) verbunden ist.

12. Spanneinrichtung nach einem der Ansprüche 8 bis 11, wobei die Überwachungsleitung (40) zwischen dem Einlass (82) und dem Auslass (83) durchgehend offen aber gegenüber der Atmosphäre verschlossen ist, wenn in der Aufnahmeöffnung jedes Spannfutters (59, 60, 61, 62) ein Spannzapfen (75, 76, 77, 78) aufgenommen und mittels der zugehörigen Spannvorrichtung korrekt verriegelt ist.

13. Spannfutteranordnung (80, 81) mit einem nach einem der Ansprüche 1 bis 8 ausgebildeten Spannfutter (1), oder einer nach einem der Ansprüche 9 bis 12 ausgebildeten Spanneinrichtung (53), wobei die Spannfutteranordnung (80, 81) eine mit einer pneumatischen Druckquelle verbindbare Eingangsleitung (84) aufweist, welche mit dem Einlass (82) der durch den Spannuntersatz verlaufenden Überwachungsleitung (40) verbunden ist, wobei die Überwachungsleitung (40) auslassseitig mit einer Ausgangsleitung (85) verbunden ist und die Ausgangsleitung (85) mit zumindest einem Drucksensor (89, 90) zum Erfassen des Drucks verbunden ist.

14. Spannfutteranordnung (80, 81) nach Anspruch 13, wobei in der Eingangsleitung (84) eine die durchströmende Luftmenge begrenzende Drossel (91) angeordnet ist, wobei die Eingangsleitung (84) mit einem ersten Drucksensor (88) verbunden ist und die Ausgangsleitung (85) mit einem zweiten und einem dritten Drucksensor (89, 90) zum Erfassen des auslassseitig in der Überwachungsleitung (40) anstehenden Drucks verbunden ist, und wobei die Spannfutteranordnung eine Auswerteelektronik zum Erfassen und Auswerten der mittels den drei Drucksensoren (88, 89, 90) ermittelten Drücke umfasst.

15. Verfahren zum Erfassen des Spannzustands einer auf einer Spannfutteranordnung (80, 81) nach Anspruch 13 oder 14 festgespannten Palette (74), wobei die Überwachungsleitung (40) über die Eingangsleitung (84) mit einer pneumatischen Druckquelle verbunden ist und wobei in der mit der Überwachungsleitung (40) auslassseitig verbundenen Ausgangsleitung (85) zumindest ein Drucksensor (89, 90) zum Erfassen des Drucks angeordnet ist, wobei die Eingangsleitung (84) mit Druck beaufschlagt wird und dass nach einer vorgegebenen Zeit der am Ausgang (85) anstehende Druck gemessen und mit dem am Eingang (84) gemessenen oder eingestellten Druck verglichen wird, und dass bei einer Druckdifferenz zwischen Eingang (84) und Ausgang (85) von weniger als 25% auf korrektes Festspannen der Palette (74) erkannt wird, und/oder dass bei einer Druckdifferenz zwischen Eingang (84) und Ausgang (84) von mehr als 25% auf fehlerhaftes Festspannen der Palette (74) erkannt wird.

16. Verfahren nach Anspruch 15, wobei die mit der Überwachungsleitung (40) auslassseitig verbundene Ausgangsleitung (85) mit einem zweiten und einem dritten Drucksensor (89, 90) verbunden ist, wobei die Eingangsleitung (84) mit Druck beaufschlagt und nach einer vorgegebenen Zeit der Druck in der Eingangsleitung (84) gemessen und mit den mittels den beiden ausgangsseitig angeordneten Drucksensoren (89, 90) gemessenen Drücken verglichen wird, und dass bei einer gemessenen Druckdifferenz von mehr als 10% zwischen den beiden ausgangsseitig angeordneten Drucksensoren (89, 90) eine Fehlermeldung ausgegeben und/oder auf fehlerhaftes Festspannen der Palette (74) erkannt wird.

## Claims

1. Collet chuck (1) for clamping pallets (46) provided with a clamping spigot (47), wherein the collet chuck (1) is provided with a receiving opening (5) for the clamping spigot (47) and with a clamping device (10) having clamping members (12) for clamping the clamping spigot (47) in place in the receiving opening (5), wherein the collet chuck (1) is provided with a monitoring line (40) which is adapted to be acted upon pneumatically and which leads from an inlet (82) to an outlet (83) and which is connected to a pressure sensor (88, 89, 90), and the receiving opening (5) has a conical insertion region (6) into which at least one control bore (7) connected to the monitoring line (40) opens, which control bore is adapted to be closed by means of the clamping spigot (47).

2. Collet chuck (1) according to claim 1, wherein the clamping device (10) has an actuating piston (11) for actuating the clamping members (12), which piston (11) is adapted to be displaced between a starting position and a locking position thereof, wherein the collet chuck (1) has a valve device (16) which is arranged between the inlet (82) and the outlet (83) of the monitoring line (40) and which can be used to vary a fluid flow through the monitoring line (40) as a function of the position of the actuating piston (11).

3. Collet chuck (1) according to claim 2, wherein the valve device (16) has a valve housing (17) and a valve body (21) received therein at least in sections, wherein, for varying the fluid flow, the valve housing (17) is adapted to be displaced relative to the valve body (21) or the valve body (21) is adapted to be displaced relative to the valve housing (17) between a blocking position and an open position thereof.

4. Collet chuck (1) according to claim 3, wherein the valve body (21) or the valve housing (17) is coupled to the actuating piston (11) in such a way that the valve device (16) to be in the open position when the actuating piston (11) has been correctly displaced into the locked position, while the valve device (16) will be in the locked position when the actuating piston (11) has not been correctly displaced into the locked position.

5. Collet chuck (1) according to claim 3 or 4, wherein the valve body (21) is arranged in a fixed position, while the valve housing (17) is connected to the actuating piston (11) by a material bond.

6. Collet chuck (1) according to claim 5, wherein the valve housing (17) comprises a first outer part (18) and a second inner part (19), wherein the outer part (18) is connected to the actuating piston (11) by a material bond, while the inner part (19) is positively connected to the outer part (18) in the axial direction, and wherein the inner part (19) is mounted in the outer part (18) with radial play.

7. Collet chuck (1) according to any one of claims 3 to 6 above, wherein an axial inlet bore (22) leads into the valve body (21) from the upper side, and an axial outlet bore (25) leads into the valve body (21) from the lower side, wherein the axial inlet bore (22) opens into a first radial through bore (23), and wherein the axial outlet bore (25) opens into a second radial through bore (24), and wherein the first radial through bore (23) extends above the second radial through bore (24), and wherein the inner part of the valve housing (19) is provided with an annular space (30), the axial length of which corresponds at least to the distance between the two radial through bores (23, 24), and wherein the annular space (30) extends over the two radial bores (23, 24) when the actuating piston (11) is in its locking position.

8. Collet chuck (1) according to any one of claims 2 to 7 above, wherein the monitoring line (40) between the inlet (82) and the outlet (83) is continuously open but closed to the atmosphere when a clamping spigot (47) is received in the receiving opening (5) of the collet chuck (1) and is correctly locked in place by means of the clamping device (10).

9. Clamping device (53) with at least two collet chucks (59, 60, 61, 62) designed according to any one of the preceding claims for clamping a pallet (74) having a number of clamping spigots (75, 76, 77, 78) corresponding to the number of collet chucks (59, 60, 61, 62), wherein the collet chucks (59, 60, 61, 62) are accommodated in a common clamping base (54), and the clamping base (54) is provided with a monitoring line (40) which is adapted to be acted upon pneumatically and which leads from an inlet (82) to an outlet (83) and which is connected to the pressure sensor (88, 89, 90), that is connected to all the control bores (7) arranged in the insertion region of the respective collet chuck (59, 60, 61, 62).

10. Clamping device (53) according to claim 9, wherein the clamping device (10) has an actuating piston (11) which is adapted to be displaced between a starting position and a locking position thereof for actuating the clamping members (12), and wherein each collet chuck (59, 60, 61, 62) has a valve device (69, 70, 71, 72) by means of which a fluid flow through the monitoring line (40) can be varied as a function of the position of the respective actuating piston (11), wherein the valve devices (69, 70, 71, 72) are arranged between the inlet (82) and the outlet (83) of the monitoring line (40) and are connected to one another in series in such a way that there will be a passage between the inlet (82) and the outlet (83) of the monitoring line (40) only when all the actuating pistons (11) have been correctly locked.

11. Clamping device according to claim 9 or 10, having an actuating piston (11) which can be displaced between a starting position and a locking position thereof for actuating the clamping members (12), wherein a pneumatic retensioning line in the region of the respective collet chuck (59, 60, 61, 62) extends into a retensioning chamber arranged above the respective actuating piston (11), wherein each retensioning line being connected directly or indirectly to the monitoring line (40).

12. Clamping device according to one of claims 8 to 11, wherein the monitoring line (40) is continuously open between the inlet (82) and the outlet (83), but closed to the atmosphere when a clamping spigot (75, 76, 77, 78) has been received in the receiving opening of each collet chuck (59, 60; 61, 62) and has been correctly locked by means of the associated clamping device.

13. Collet chuck assembly (80, 81) having a collet chuck (1) designed according to any one of claims 1 to 8 above, or a clamping device (53) designed according to any one of claims 9 to 12 above, wherein the collet chuck assembly (80, 81) has an inlet line (84) which is adapted to be connected to a pneumatic pressure source and which is connected to the inlet (82) of the monitoring line (40) running through the collet chuck base, wherein, on the outlet side, the monitoring line (40) is connected to an outlet line (85), and the outlet line (85) is connected to at least one pressure sensor (89, 90) for detecting the pressure.

14. Collet chuck assembly (80, 81) according to claim 13, wherein a throttle (91) limiting the amount of air flowing through is arranged in the inlet line (84), wherein the inlet line (84) is connected to a first pressure sensor (88), and the outlet line (85) is connected to second and third pressure sensors (89, 90) for detecting the pressure prevailing in the monitoring line (40) on the outlet side, and wherein the collet chuck assembly comprises an electronic evaluation unit for detecting and evaluating the pressures detected by means of the three pressure sensors (88, 89, 90).

15. Method for detecting the clamping state of a pallet (74) clamped in place on a collet chuck assembly (80, 81) according to claim 13 or 14, wherein the monitoring line (40) is connected to a pneumatic pressure source via the inlet line (84), and wherein at least one pressure sensor (89, 90) for detecting the pressure is arranged in the outlet line (85) connected to the monitoring line (40) on the outlet side, wherein the inlet line (84) is pressurized and, after a predetermined time, the pressure prevailing at the outlet (85) is measured and compared with the pressure measured or set at the inlet (84), and if the pressure difference between the inlet (84) and the outlet (85) is below 25%, correct clamping of the pallet (74) is detected, and/or if the pressure difference between the inlet (84) and the outlet (84) is above 25%, incorrect clamping of the pallet (74) is detected.

16. Method according to claim 15, wherein the outlet line (85) connected to the monitoring line (40) on the outlet side is connected to second and third pressure sensors (89, 90), wherein the inlet line (84) is pressurized and, after a predetermined time, the pressure in the inlet line (84) is measured and compared with the pressures measured by means of the two pressure sensors (89, 90) arranged on the outlet side, and if the measured pressure difference between the two pressure sensors (89, 90) arranged on the outlet side is above 10%, an error message is output and/or incorrect clamping of the pallet (74) is detected.

## Revendications

1. Mandrin de serrage (1) destiné à serrer fermement des palettes (46) équipées d'un tenon de serrage (47), dans lequel le mandrin de serrage (1) est équipé d'une ouverture de réception (5) pour le tenon de serrage (47) et d'un dispositif de serrage (10) présentant un organe de serrage (12) pour le serrage ferme du tenon de serrage (47) dans l'ouverture de réception (5),
dans lequel le mandrin de serrage (1) est équipé d'un conduit de surveillance (40), pouvant être sollicité pneumatiquement et conduisant d'une admission (82) à une évacuation (83), qui est relié à un capteur de pression (88, 89, 90), et l'ouverture de réception (5) présente une zone d'introduction (6) conique dans laquelle débouche au moins un alésage de contrôle (7) relié au conduit de surveillance (40), lequel alésage de contrôle peut être fermé au moyen du tenon de serrage (47).

2. Mandrin de serrage (1) selon la revendication 1, dans lequel le dispositif de serrage (10) présente un piston d'actionnement (11) pouvant être glissé entre une position de sortie et une position de verrouillage pour un actionnement de l'organe de serrage (12),
dans lequel le mandrin de serrage (1) présente un dispositif de soupape (16) agencé entre l'admission (82) et l'évacuation (83) du conduit de surveillance (40), au moyen duquel l'écoulement d'un fluide à travers le conduit de surveillance (40) peut être modifié en fonction de la position du piston d'actionnement (11).

3. Mandrin de serrage (1) selon la revendication 2, dans lequel le dispositif de soupape (16) présente un logement de soupape (17) et un corps de soupape (21) reçu au moins partiellement dans celui-ci, dans lequel le logement de soupape (17) par rapport au corps de soupape (21) ou le corps de soupape (21) par rapport au logement de soupape (17) peut être glissé entre une position de verrouillage et une position d'ouverture pour la modification de l'écoulement du fluide.

4. Mandrin de serrage (1) selon la revendication 3, dans lequel le corps de soupape (21) ou le logement de soupape (17) est couplé avec le piston d'actionnement (11) de sorte que le dispositif de soupape (16) se trouve dans la position d'ouverture quand le piston d'actionnement (11) a été correctement glissé jusque dans la position de verrouillage, tandis que le dispositif de soupape (16) se trouve dans la position de verrouillage quand le piston d'actionnement (11) n'a pas été correctement glissé jusque dans la position de verrouillage.

5. Mandrin de serrage (1) selon la revendication 3 ou 4, dans lequel le corps de soupape (21) est agencé de façon stationnaire, tandis que le logement de soupape (17) est relié au piston d'actionnement (11) par liaison de matière.

6. Mandrin de serrage (1) selon la revendication 5, dans lequel le logement de soupape (17) comprend une première pièce extérieure (18) et une seconde pièce intérieure (19), dans lequel la pièce extérieure (18) est reliée au piston d'actionnement (11) par liaison de matière, tandis que la pièce intérieure (19) est reliée à la pièce extérieure (18) par liaison de matière dans la direction axiale, et dans lequel la pièce intérieure (19) est reçue dans la pièce extérieure (18) par un jeu radial.

7. Mandrin de serrage (1) selon l'une des revendications 3 à 6, dans lequel un alésage d'admission (22) axial mène depuis le côté supérieur jusque dans le corps de soupape (21) et un alésage d'évacuation (25) axial mène depuis le côté inférieur jusque dans le corps de soupape (21), dans lequel l'alésage d'admission (22) axial débouche dans un premier alésage traversant (23) radial et dans lequel l'alésage d'évacuation (25) axial débouche dans un second alésage traversant (24) radial, et dans lequel le premier alésage traversant (23) radial se déroule au-dessus du second alésage traversant (24) radial, et dans lequel la pièce intérieure (19) du logement de soupape est équipée d'un espace annulaire (30) dont la longueur axiale correspond au moins à la distance entre les deux alésages traversants (23, 24) radiaux, et dans lequel l'espace annulaire (30) s'étend par-dessus les deux alésages traversants (23, 24) radiaux lorsque le piston d'actionnement (11) se trouve dans sa position de verrouillage.

8. Mandrin de serrage (1) selon l'une des revendications 2 à 7, dans lequel le conduit de surveillance (40) est ouvert en permanence entre l'admission (82) et l'évacuation (83) mais fermé par rapport à l'atmosphère lorsqu'un tenon de serrage (47) est reçu dans l'ouverture de réception (5) du mandrin de serrage (1) et correctement verrouillé au moyen du dispositif de serrage (10).

9. Équipement de serrage (53) avec au moins deux mandrins de serrage (59, 60, 61, 62) selon l'une des revendications précédentes, destiné à serrer fermement une palette (74), laquelle présente un nombre de tenons de serrage (75, 76, 77, 78) correspondant au nombre de mandrins de serrage (59, 60, 61, 62), dans lequel les mandrins de serrage (59, 60, 61, 62) sont reçus dans une embase de serrage (54) commune et l'embase de serrage (54) est équipée d'un conduit de surveillance (40), pouvant être sollicité pneumatiquement et conduisant d'une admission (82) à une évacuation (83), qui est relié au capteur de pression (88, 89, 90), lequel conduit de surveillance est relié à tous les alésages de contrôle (7) agencés dans la zone d'introduction du mandrin de serrage (59, 60, 61, 62) respectif.

10. Équipement de serrage (53) selon la revendication 9, dans lequel le dispositif de serrage (10) présente un piston d'actionnement (11) pouvant être glissé entre une position de sortie et une position de verrouillage pour un actionnement de l'organe de serrage (12) et dans lequel chaque mandrin de serrage (59, 60, 61, 62) présente un dispositif de soupape (69, 70, 71, 72), au moyen duquel l'écoulement d'un fluide à travers le conduit de surveillance (40) peut être modifié en fonction de la position du piston d'actionnement (11) respectif, dans lequel les dispositifs de soupape (69, 70, 71, 72) sont agencés entre l'admission (82) et l'évacuation (83) du conduit de surveillance (40) et sont reliés les uns aux autres en série de sorte qu'un passage entre l'admission (82) et l'évacuation (83) du conduit de surveillance (40) existe uniquement quand tous les pistons d'actionnement (11) ont été correctement verrouillés.

11. Équipement de serrage selon la revendication 9 ou 10, comprenant un piston d'actionnement (11) pouvant être glissé entre une position de sortie et une position de verrouillage pour un actionnement de l'organe de serrage (12), dans lequel dans la zone du mandrin de serrage (59, 60, 61, 62) respectif un conduit de resserrage pneumatique mène jusque dans un espace de resserrage agencé au-dessus du piston d'actionnement (11) respectif, dans lequel chaque conduit de resserrage est relié directement ou indirectement au conduit de surveillance (40).

12. Équipement de serrage selon l'une des revendications 8 à 11, dans lequel le conduit de surveillance (40) est ouvert en permanence entre l'admission (82) et l'évacuation (83) mais fermé par rapport à l'atmosphère lorsqu'un tenon de serrage (75, 76, 77, 78) est reçu dans l'ouverture de réception de chaque mandrin de serrage (59, 60, 61, 62) et correctement verrouillé au moyen du dispositif de serrage correspondant.

13. Agencement de mandrin de serrage (80, 81) comprenant un mandrin de serrage (1) selon l'une des revendications 1 à 8 ou un équipement de serrage (53) selon l'une des revendications 9 à 12, dans lequel l'agencement de mandrin de serrage (80, 81) présente un conduit d'entrée (84) pouvant être relié à une source de pression pneumatique, lequel est relié à l'admission (82) du conduit de surveillance (40) se déroulant à travers l'embase de serrage, dans lequel le conduit de surveillance (40) est relié à un conduit de sortie (85) du côté de la sortie et le conduit de sortie (85) est relié à au moins un capteur de pression (89, 90) pour la saisie de la pression.

14. Agencement de mandrin de serrage (80, 81) selon la revendication 13, dans lequel un étranglement (91) limitant la quantité d'air qui traverse est agencé dans le conduit d'entrée (84), dans lequel le conduit d'entrée (84) est relié à un premier capteur de pression (88) et le conduit de sortie (85) est relié à un deuxième et un troisième capteur de pression (89, 90) pour la saisie de la pression régnant du côté de l'évacuation dans le conduit de surveillance (40), et dans lequel l'agencement de mandrin de serrage comprend une électronique d'analyse pour la saisie et l'analyse des pressions établies au moyen des trois capteurs de pression (88, 89, 90).

15. Procédé de saisie de l'état de serrage d'une palette (74) fermement serrée sur un agencement de mandrin de serrage (80, 81) selon la revendication 13 ou 14, dans lequel le conduit de surveillance (40) est relié à une source de pression pneumatique via le conduit d'entrée (84) et dans lequel au moins un capteur de pression (89, 90) est agencé dans le conduit de sortie (85) relié au conduit de surveillance (40) du côté de l'évacuation pour la saisie de la pression, dans lequel le conduit d'entrée (84) est sollicité avec une pression et en ce qu'après un temps prédéfini la pression régnant à la sortie (85) est mesurée et comparée à la pression mesurée ou réglée à l'entrée (84), et en ce que dans le cas d'une différence de pression entre l'entrée (84) et la sortie (85) inférieure à 25 % est reconnu un serrage ferme correct de la palette (74), et/ou en ce que dans le cas d'une différence de pression entre l'entrée (84) et la sortie (84) supérieure à 25 % est reconnu un serrage ferme erroné de la palette (74).

16. Procédé selon la revendication 15, dans lequel le conduit de sortie (85) relié au conduit de surveillance (40) du côté de l'évacuation est relié à un deuxième et un troisième capteur de pression (89, 90), dans lequel le conduit d'entrée (84) est sollicité avec une pression et après un temps prédéfini la pression dans le conduit d'entrée (84) est mesurée et comparée aux pressions mesurées au moyen des deux capteurs de pression (89, 90) agencés du côté de la sortie, et en ce que dans le cas d'une différence de pression mesurée supérieure à 10% entre les deux capteurs de pression (89, 90) agencés du côté de la sortie, un message d'erreur est émis et/ou un serrage ferme erroné de la palette (74) est reconnu.
